# EUROPEAN PATENT SPECIFICATION

(11) **EP 4 576 046 B1**
(45) Date of publication and mention of the grant of the patent: **10.06.2026**
(21) Application number: 24208025.7
(22) Date of filing: 22.10.2024
(51) Int. Cl.: G08G 5/21, G08G 5/26, G08G 5/54, G08G 5/76, G06N 3/08, G06N 20/00, G06N 20/20

(54) **RUNWAY CONDITION GENERATION AND VEHICLE LANDING SAFETY SYSTEM**
LANDEBAHNZUSTANDSERZEUGUNG UND FAHRZEUGLANDESICHERHEITSSYSTEM
SYSTÈME DE GÉNÉRATION D'ÉTAT DE PISTE ET DE SÉCURITÉ D'ATTERRISSAGE DE VÉHICULE

(30) Priority: 16.11.2023 IN 202311077892; 01.02.2024 US 202418429955
(43) Date of publication of application: 25.06.2025
(73) Proprietor: Honeywell International Inc., Charlotte, NC 28202 (US)
(72) Inventor: KANAGARAJAN, Sivakumar, Charlotte, 28202 (US); BALADHANDAPANI, Gobinathan, Charlotte, 28202 (US); SUBRAMANIYAN, Muthusankar, Charlotte, 28202 (US)
(74) Representative: Haseltine Lake Kempner LLP

(56) References cited:
- FR-A1- 3 075 417
- US-A1- 2019 251 852
- US-A1- 2021 090 444
- US-A1- 2021 221 531

## Description

### CROSS-REFERENCE TO RELATED APPLICATIONS

This application claims the benefit of foreign Indian Provisional Patent Application Serial No. 202311077892, filed on November 16, 2023 with the Government of India Patent Office and entitled "Runway Condition Generation And Vehicle Landing Safety System,".

### TECHNICAL FIELD

Embodiments of the present disclosure generally relate to facilitating the safe landing of a vehicle on a runway, and specifically to a machine-learning model-based system for determining required vehicle landing parameters based on real-time runway conditions.

### BACKGROUND

In various contexts, runway conditions must be ascertained to ensure safe operation of vehicles on a runway. Inventors have discovered problems with current implementations of runway condition assessment and vehicle operation safety techniques. Through applied effort, ingenuity, and innovation, the inventors have solved many of these problems by developing the solutions embodied in the present disclosure, the details of which are described further herein.

US2021090444A1 discloses a method and apparatus for assessing runway surface conditions including: configuring a runway surface processing module to process: a first type of reported runway surface condition information, a second type of a set of Runway Condition Assessment Matrix codes, and a third type of a set of runway surface condition codes including: SNOWTAM codes; selecting, at least one of the first, second or third type of runway surface information to input to the runway surface processing module, to estimate at least a braking distance and a braking action of the aircraft.

FR3075417A1 discloses a method for estimating a surface condition of a runway, the method being executed by an electronic device connected to a plurality of sources capable of transmitting a message comprising an information datum.

US2021221531A1 discloses a flight deck system that includes a cockpit display device on which an airport display is displayed and a controller. The controller is configured to generate a runway condition graphic having at least three different segments to be overlaid over or positioned adjacent to a depiction of a runway on the airport display, wherein each segment of the runway condition graphic is associated with a different segment of the runway and configured to provide a graphical indication of a contaminant condition for the associated segment.

US2019251852A1 discloses a decision aid system that includes an acquiring module for acquiring at least one current flight parameter of the aircraft, a reception module for receiving a set of information comprising runway characteristic data concerning at least the landing runway on which the aircraft is likely to land, an estimation module for estimating at least one likelihood of at least one state in which the aircraft can be upon the landing, an estimation module for estimating at least one probability of transition between the state or states estimated by the estimation module, an assessment computation module for in-flight assessment of at least one landing distance likely to be traveled by the aircraft on the landing runway, a determination module for determining at least one landing recommendation, a sending module for sending a signal representative of the landing recommendation or recommendations to a user device.

### BRIEF SUMMARY

In general, embodiments of the present disclosure herein provide enhanced runway condition assessment and vehicle landing safety for one or more vehicles. Other implementations will be, or will become, apparent to one with skill in the art upon examination of the following figures and detailed description. It is intended that all such additional implementations be included within this description be within the scope of the disclosure and be protected within the scope of the following claims.

In accordance with a first aspect of the present disclosure, a computer-implemented method is defined in claim 1.

The computer-implemented method further includes generating, by the runway condition model, a validity score associated with at least one portion of the runway condition data aggregated from the plurality of runway condition data sources, wherein the validity score is based at least in part on timestamp data associated with the at least one portion of the runway condition data. The example computer-implemented method also includes generating, by the runway condition model, the confidence score associated with the runway condition code based at least in part on the validity score.

The computer-implemented method further includes detecting a runway section transition trend associated with the at least one section of the plurality of sections of the runway, wherein the runway section transition trend indicates a transition of the surface condition of the at least one section from a first state to a second state, and wherein the runway section transition trend is generated based at least in part on ground sensor data generated by ground sensors associated with the runway collected over a predetermined periodicity of time. The example computer-implemented method also includes generating, by the runway condition model, the confidence score associated with the runway condition code based at least in part on the runway section transition trend.

The computer-implemented method further includes determining, based at least in part on a combination of the runway data, vehicle profile data associated with a vehicle, and the adjusted runway condition codes associated with the plurality of sections of the runway, a plurality of required landing parameters for each section of the plurality of sections of the runway, wherein the plurality of required landing parameters are associated with executing a landing procedure for the vehicle via the runway, and wherein the plurality of required landing parameters comprise a required landing distance associated with each section of the plurality of sections of the runway. The example computer-implemented method also includes determining, based at least in part on the plurality of required landing parameters, that a required runway length associated with the landing procedure does not satisfy an available runway length associated with the runway. The example computer-implemented method also includes, in response to determining that the required runway length does not satisfy the available runway length, causing display of an alert via one or more computing devices.

The computer-implemented method further includes updating, based at least in part on input received via the user interface, data related to at least one current surface condition associated with the at least one section of the plurality of sections of the runway associated with the adjusted runway condition code. The example computer-implemented method also includes generating, based on updating the adjusted runway condition code, one or more required landing parameters for the at least one section of the plurality of sections of the runway.

The computer-implemented method further includes receiving at least one prior vehicle landing deceleration profile, wherein the at least one prior vehicle landing deceleration profile is generated by an onboard runway assessment and landing safety system associated with a vehicle upon landing on a respective runway. The example computer-implemented method also includes generating, by the runway condition model, the confidence score associated with the runway condition code based at least in part on the at least one prior vehicle landing deceleration profile.

The computer-implemented method further includes wherein the confidence score associated with the runway condition code is generated by the runway condition model based at least in part on at least one or more of validity scores associated with one or more portions of the runway condition data, runway section transition trends associated with the plurality of sections of the runway, ground operator input data generated by ground operators associated with the runway, prior vehicle landing deceleration profiles associated with one or more respective vehicles that recently landed on the runway, or vehicle operator confirmations generated by vehicle operators associated with the prior vehicle landing deceleration profiles.

The computer-implemented method further includes wherein the plurality of runway condition data sources comprises at least one ground sensor associated with the runway, digital notices to airmen (NOTAMs), voice broadcasts, automated terminal information service (ATIS) messages, datalink messages, pilot reports (PIREPs), or prior vehicle landing deceleration profiles associated with one or more respective vehicles that recently landed on the runway.

The computer-implemented method further includes wherein the plurality of sections of the runway comprises four or more sections of the runway.

The computer-implemented method further includes wherein the runway data comprises at least one of a runway length, a runway threshold, or a runway surface type.

In accordance with a second aspect of the disclosure, a computer program product for providing enhanced runway condition assessment and vehicle landing safety for one or more vehicles is provided. In one example embodiment computer program product, the computer program product includes at least one non-transitory computer-readable storage medium having computer program code stored thereon that, in execution with at least one processor, configures the computer program product for performing any one of the example computer-implemented methods described herein.

In accordance with a third aspect of the disclosure, an apparatus is defined in claim 11.

### BRIEF DESCRIPTION OF THE SEVERAL VIEWS OF THE DRAWINGS

To easily identify the discussion of any particular element or act, the most significant digit or digits in a reference number refer to the figure number in which that element is first introduced.
FIG. 1 illustrates an example system that enables enhanced runway condition assessment and vehicle landing safety techniques in accordance with at least some example embodiments of the present disclosure.
FIG. 2 illustrates an example vehicle apparatus in accordance with at least some example embodiments of the present disclosure.
FIG. 3 illustrates an example runway assessment and landing safety (RALS) platform in accordance with at least some example embodiments of the present disclosure.
FIG. 4 illustrates an example RALS system apparatus in accordance with at least some example embodiments of the present disclosure.
FIG. 5 illustrates an example of a runway condition assessment matrix (RCAM) in accordance with at least some example embodiments of the present disclosure.
FIG(s). 6A-6C illustrate examples of notices to airmen (NOTAMs) comprising runway condition data in accordance with at least some example embodiments of the present disclosure.
FIG. 7 illustrates an operational example of a user interface associated with RALS system application instance in accordance with at least some example embodiments of the present disclosure.
FIG. 8 illustrates another operational example of a user interface associated with RALS system application instance in accordance with at least some example embodiments of the present disclosure.
FIG. 9 illustrates another operational example of a user interface associated with RALS system application instance in accordance with at least some example embodiments of the present disclosure.
FIG. 10 illustrates a flowchart depicting example operations of an example process for providing enhanced runway condition assessment and vehicle landing safety for one or more vehicles in accordance with at least some example embodiments of the present disclosure.
FIG. 11 illustrates a flowchart depicting example operations of an example process for determining a required runway length for a vehicle in accordance with at least some example embodiments of the present disclosure.

### DETAILED DESCRIPTION

Embodiments of the present disclosure now will be described more fully hereinafter with reference to the accompanying drawings, in which some, but not all, embodiments of the disclosure are shown. Indeed, embodiments of the disclosure may be embodied in many different forms and should not be construed as limited to the embodiments set forth herein, rather, these embodiments are provided so that this disclosure will satisfy applicable legal requirements. Like numbers refer to like elements throughout.

### OVERVIEW

According to the Flight Safety Foundation (FSF), the presence of water, snow, slush, ice, solid contaminants (e.g., rubber deposits from aerial vehicle tires), and/or the like on a runway may adversely affect the braking performance of an aerial vehicle by reducing the friction of the tires of the aerial vehicle on the runway surface. For example, wet conditions on a runway may increase the rollout distance of an aerial vehicle by as much as 225%. Furthermore, in many cases, a crew associated with an aerial vehicle may not be aware of the current condition of the runway surface. The lack of such data may lead to delayed braking of the aerial vehicle by an operator, which is a major contributing safety factor in many runway overrun accidents.

Notwithstanding the advanced state of current aerospace technologies, aerial vehicles are still at risk of overrunning and/or veering off a runway during the execution of routine landing procedures. Many factors may cause current aerospace technologies to fail to effectively prevent an aerial vehicle from overrunning or veering off a runway, potentially resulting in catastrophic circumstances and/or damage to the aerial vehicle. For example, a lack of runway length available after touchdown of the aerial vehicle, a delayed action by a crew member in the use of braking devices to decelerate the aerial vehicle, and/or adverse runway surface conditions such as ice or standing water may lead to a technological failure resulting in a runway overrun and/or veer-off.

Poor runway surface conditions add to the myriad factors that may adversely impact the operation of vehicles on the runway, for example landing procedures executed by various vehicle types (e.g., commercial airliners, private aircraft, and/or the like). Runway surfaces that are contaminated with water, slush, ice, snow, solid contaminants (e.g., rubber residue from vehicle tires), and/or the like may adversely impact various systems associated with a vehicle (e.g., braking systems, landing gear systems, etc.) and may make landing procedures hazardous. Furthermore, poor runway surface conditions may complicate a landing procedure that is already impacted by various factors such as environmental factors (e.g., headwinds, crosswinds, inclement weather, impaired visibility, etc.), vehicle configurations (e.g., vehicle weight, cargo balance, etc.), runway attributes (e.g., runway length, runway thresholds, runway surface type, landing usable runway length, etc.) and/or the like, and thus increases the risk of runway overrun and/or veer-off.

While advisory entities such as the Federal Aviation Administration (FAA) have attempted to standardize various ways to classify runway surface conditions and notify vehicle operators, vehicle operators and/or ground crew members are often unaware of the current runway surface conditions associated with a runway for which a vehicle is intended to land upon. For example, various broadcasts and/or messages (e.g., notices to airmen (NOTAMs), automatic terminal information service (ATIS) messages, etc.) may comprise old data related to the surface conditions of a particular runway and may therefore be insufficient for use in a landing procedure being executed by a respective vehicle. To further complicate this matter, the various broadcasts and/or messages relayed to a vehicle attempting to land upon a runway may only include a general description of the surface conditions of the entire length of the runway. Such general information may not accurately describe the current, "real-time" surface conditions of the runway. For example, the surface conditions of a first section of a respective runway may have changed (e.g., transitioned from wet to dry), while a second section of the respective runway has not changed (e.g., has stayed wet). The variability of the surface conditions amongst various respective sections of a particular runway may greatly impact the planning and/or execution of a landing procedure and may increase the risk of the vehicle overrunning and/or veering off the runway.

Various vehicle landing safety systems neglect to consider the potential variability of the current surface conditions of a particular runway. Furthermore, various vehicle landing safety systems may rely on manual data input and/or outdated runway surface condition data to calculate various required landing parameters for a respective vehicle. Embodiments of the present disclosure are configured to address the limitations of such vehicle landing safety systems by providing an enhanced runway assessment and landing safety (RALS) platform configured to assess the current runway surface conditions for a plurality of sections of a respective runway. Furthermore, embodiments of the present disclosure may also be configured to automatically determine various required landing parameters for each section of the plurality of sections of the respective runway in order execute a safe landing procedure for a respective vehicle (e.g., a commercial airliner, private jet, and/or the like).

In this regard, embodiments of the present disclosure provide connectivity between a RALS system and an onboard RALS system that manages various onboard runway surface condition assessment and vehicle landing safety operations of a respective vehicle. The RALS system may be configured to host computations that are remotely configured, executed, and/or broadcast to one or more onboard RALS systems associated with one or more respective multiple vehicles associated with the RALS platform. In some embodiments, the RALS system improves upon existing techniques by employing machine learning (ML) model techniques configured to automatically ingest, parse, and/or compile runway condition data from various runway condition data sources and in various data formats in order to generate adjusted runway condition codes describing the surface conditions of various individual sections of a respective runway. The adjusted runway condition codes may then be automatically provisioned, transmitted, populated, and/or otherwise inputted into various hardware and/or software components for use in calculating required landing parameters for each of the individual sections of a respective runway in order execute a safe landing procedure for a respective vehicle).

By employing the required landing parameters associated with each of the individual sections of a respective runway, embodiments may be configured to generate an accurate required runway length (e.g., a require landing distance) necessary for the safe execution of a landing procedure by a vehicle, thus improving upon various existing landing safety systems. Furthermore, generating accurate required landing distances further improves generating an accurate calculation of a max field length limited landing weight for a vehicle. In some embodiments, the maximum landing field length limited weight is determined by repeatedly calculating a required landing distance for vehicle and adjusting a landing weight data input value associated with the vehicle until a maximum landing weight is determined that will result in a required landing distance less than or equal to a usable runway length associated with a respective runway. As such, embodiments of the present disclosure provide improved landing distance calculations for heavy vehicles (e.g., vehicles with large fuel capacities), and said heavy vehicles can be landed safely and efficiently by using the techniques described herein.

Embodiments of the present disclosure feature an onboard RALS system associated with a vehicle that is in constant communication with the RALS system. In some embodiments, the onboard RALS system embodies and/or integrates with an application instance configured to integrate with one or more vehicle systems and/or apparatuses associated with a vehicle associated with the RALS platform. As such, one or more onboard RALS systems associated with one or more vehicles may enable the RALS system to function as a centralized system for facilitating the runway condition assessment and vehicle landing safety for the one or more vehicles. In various embodiments, the onboard RALS system may integrate with, or be embodied by, a computing device such as a line replaceable unit (LRU) associated with a vehicle, a gateway computing device, a legacy computing device, a flight management system, a takeoff and landing data (TOLD) application, and/or any other combination of computing hardware and/or software associated the vehicle.

In various embodiments, the onboard RALS system associated with a respective vehicle may transmit one or more portions of data to one or more computing devices associated with the RALS system via a communications network. For example, the onboard RALS system may be configured to transmit one or more portions of data related to operation of the vehicle and/or a current vehicle profile associated with the vehicle. In various embodiments, the vehicle profile may comprise data related at least one or more of a vehicle type, a vehicle identifier, a number of passengers, a total vehicle weight, a vehicle payload weight, a vehicle fuel level, and/or any descriptive data related to the vehicle such as the status of the vehicle, the systems of the vehicle, the personnel associated with the vehicle, and/or the mission of the vehicle.

In this regard, in various embodiments, a RALS system apparatus of the RALS system may be configured to execute one or more operations associated with the onboard RALS system. For example, in various contexts, the RALS system apparatus may be configured to perform at least a portion of the processing associated with the onboard RALS system associated with a vehicle (e.g., an aerial vehicle, whether piloted or unmanned, or any ground vehicle, operated or autonomous). As such, the computational resources needed by the vehicle may be advantageously reduced. Furthermore, in some embodiments, the functionality of the RALS system is instead provided via the onboard RALS system for a particular vehicle (e.g., via an application instance associated with the RALS system).

In various examples, the RALS system apparatus may be configured to receive, retrieve, aggregate, parse, and/or otherwise process runway data associated with one or more runways, where the runway data may comprise at least one of a runway identifier, a runway length, a runway threshold, a landing usable runway length, and/or a runway surface type associated with the one or more runways. Additionally, the RALS system apparatus may be configured to receive, retrieve, aggregate, parse, and/or otherwise process runway condition data associated with a runway surface condition associated with a plurality of sections of the one or more runways. In various examples, the runway condition data is received from a plurality of runway condition data sources, where the plurality of runway condition data sources comprises at least one or more of one or more ground sensors associated with one or more respective runways, digital notices to airmen (NOTAMs), voice broadcasts, automated terminal information service (ATIS) messages, datalink messages, pilot reports (PIREPs), and/or prior vehicle landing deceleration profiles associated with one or more respective vehicles that recently landed on the runway. In this regard, the runway condition data may be configured in multiple discrete formats. For example, the runway condition data may be configured as a data object associated with one or more broadcast messages (e.g., NOTAMs, ATIS messages, etc.) and may comprise various portions of text data and/or numerical data configured to describe to the surface conditions of a particular runway. Additionally or alternatively, the runway condition data may be configured as raw data generated, for example, by one or more ground sensors associated with a particular runway.

In some embodiments, the RALS system apparatus may be configured to input the runway condition data into a runway condition model associated with the RALS system. In various embodiments, the runway condition model may be configured to generate runway section condition data output related to each of one or more sections of a respective runway based on the runway condition data. In this regard, the RALS system apparatus may be configured to determine, based on the runway section condition output data generated by the runway condition model, a runway condition code associated with the one or more sections of the respective runway. In various embodiments, a runway condition code may be associated with the runway condition assessment matrix (RCAM) curated by the international civil aviation organization (ICAO). The RCAM is a data matrix that defines various runway condition codes numerated from zero (0) to six (6) that may be used to describe various surface conditions and/or surface contaminants for a runway. For example, according the RCAM, a runway condition code 6 describes dry runway surface conditions, and a runway condition code 0 describes wet ice, slush over ice, water on top of compacted snow, and/or dry snow or wet snow on top of ice. The runway condition codes defined by the RCAM may also indicate a depth of the surface contaminant associated with the runway condition. For example, a runway condition code 2 may indicate that there is more than a 3mm depth of water and/or slush on a respective runway surface.

In various embodiments, the runway condition model associated with the RALS system may be configured to generate a confidence score associated with a runway condition code that has been determined for a particular section of runway. In various examples, the confidence score associated with a runway condition code is generated by the runway condition model based on at least one or more of validity scores associated with one or more portions of the runway condition data, runway section transition trends associated with the plurality of sections of the runway, ground operator input data generated by ground operators associated with the runway, prior vehicle landing deceleration profiles associated with one or more respective vehicles that recently landed on the runway, and/or vehicle operator confirmations generated by vehicle operators associated with the prior vehicle landing deceleration profiles.

Furthermore, the runway condition model associated with the RALS system may be configured to generate an adjusted runway condition code for a particular section of a runway based on a confidence score associated with a runway condition code that was initially determined for the particular section of the runway. For example, if a particular section of a runway is initially associated with a runway condition code of 4 (e.g., indicating -15°C (5°F) and colder outside air temperatures and/or compacted snow on the runway) but the runway condition model determines that the initial runway condition code has a low confidence score, the runway condition model may downgrade the initial runway condition code of 4 and generate an adjusted runway condition code of 3 (e.g., indicating slippery wet conditions, dry snow or wet snow on top of compacted snow, more than 3mm of wet or dry snow, or higher than -15°C (5°F) outside air temperatures with compacted snow on the runway) for the particular section of the runway. As such, the RALS system may employ the adjusted runway condition code while determining the required landing parameters for the particular section of runway. In this way, the RALS system may ensure that an appropriate (e.g., safe) required runway length is computed for a respective vehicle executing a landing procedure on the runway.

Alternatively, in various examples, if a particular section of a runway is initially associated with a runway condition code of 4, but the runway condition model determines that the initial runway condition code has a low confidence score, the runway condition model may upgrade the initial runway condition code of 4 and generate an adjusted runway condition code of 5 (e.g., indicating frost, wet or damp surface conditions of 1/8 inch (3mm) depth or less, or 1/8 (3mm) depth or less of slush, dry snow, or wet snow) for the particular section of the runway. As such, the RALS system may employ the adjusted runway condition code while determining the required landing parameters for the particular section of runway. In this way, the RALS system may ensure that an appropriate (e.g., efficient) required runway length is computed for a respective vehicle executing a landing procedure on the runway.

In this regard, the runway condition model is configured to determine whether to generate adjusted runway condition codes based on downgrading or upgrading initial runway condition codes for respective sections of runway that are associated with low confidence scores. In various contexts, the runway condition model may determine whether to downgrade or upgrade an initial runway condition code associated with a respective section of a runway based on a runway section transition trend associated with a changing surface condition of the respective section of the runway. Furthermore, in various examples, the runway condition model may update one or more adjusted runway condition codes for various sections of a runway in real-time based on updated runway condition data aggregated from various runway condition data sources. The updated runway condition data may comprise at least one portion of data associated with one or more factors affecting a current runway surface condition of one or more sections of the runway for which the vehicle is to land upon. For example, the updated runway condition data may comprise data related to at least one of one or more runway section transition trends associated with the respective sections of the runway, current ground sensor data being generated by one or more ground sensors associated with the runway, newly received messages (e.g., NOTAMs, ATISs, etc.), and/or the like.

In various embodiments, the RALS system may be configured to cause the automatic provision of one or more adjusted runway condition codes into one or more computing devices and/or software applications associated with a respective vehicle. For example, the RALS system may be configured to cause the automatic provision of one or more adjusted runway condition codes into a flight management system (FMS), TOLD application, RALS system application instance associated with an onboard RALS system, vehicle onboard system, and/or vehicle apparatus associated with the respective vehicle. In this regard, the RALS system apparatus associated with the RALS system may be configured to cause the dynamic configuration of a user interface associated with the one or more computing devices and/or software applications based on at least one section of a plurality of sections of a runway corresponding to one or more adjusted runway condition codes.

As will be appreciated, various embodiments of the present disclosure enable quicker action by vehicle operators and crew members and such embodiments thus reduce the likelihood of errors, unsafe scenarios, and/or other disastrous circumstances arising from incorrect decisions made by an operator and/or delayed decision-making by an operator due to circumstances associated with the various runway surface conditions. Furthermore, the RALS platform may support one or more operators that may lack the knowledge and/or experience with which to timely ascertain the needed vehicle control inputs (e.g., braking system inputs) necessary to ensure the safety, efficiency, and optimal execution of a landing procedure associated with the vehicle.

Additionally, embodiments of the present disclosure provide for a myriad user interface improvements, as well as improvements to the utilization of various vehicle landing safety systems, by automatically providing adjusted runway condition code data and/or automatically displaying said data on one or more user interfaces associated with the vehicle and/or vehicle operator. For example, embodiments of the present disclosure are configured to arrange user interface components in a particular manner that is tied to the real-time determined or predicted circumstances of operating and/or landing of the vehicle. In this regard, the user interfaces depicted and described herein are non-arbitrarily arranged to provide such technical advantages in addition to the aforementioned advantages to both vehicle landing safety system and vehicle operators.

It will be appreciated that embodiments of the present disclosure may be advantageous for each of a number of vehicle types. In this regard, aerial vehicles are utilized as an exemplary type of vehicle for purposes of simplifying the disclosure. For example, the methods described herein may be applicable to the fields of autonomous automobile operation, autonomous watercraft operation, and/or the like.

### DEFINITIONS

"Runway assessment and landing safety (RALS) platform" refers to a system of one or more computing devices embodied in hardware, software, firmware, and/or any combination thereof, that may be distributed or centralized, and is configured to monitor and/or process data related to the surface conditions of one or more runways and facilitate the computation of various required landing parameters for each section of a plurality of sections of the one or more runways. For example, components of the RALS platform are configured to facilitate the safe landing of one or more vehicles on respective runways by employing a machine learning (ML)-based runway condition model to generate adjusted runway condition codes for use in one or more calculations used to determine the required landing parameters for each section of a plurality of sections of the one or more runways.

A RALS platform in some contexts is associated with one or more enterprises such as, for example, a logistics enterprise, a delivery and shipment enterprise, a commercial airline, an aerial delivery enterprise, an urban air mobility (UAM) enterprise, an advanced air mobility (AAM) enterprise, a military enterprise, and/or the like that manages and/or deploys a fleet of vehicles. The RALS platform in some contexts includes and/or integrates with one or more systems, computing devices, services, and/or datastores. For example, the RALS platform may interface with one or more vehicle operation management systems, environment data systems, air traffic control systems, UAM systems, and/or the like.

"RALS system" refers to refers to one or more computing devices of a RALS platform, the one or more computing devices embodied in hardware, software, firmware, and/or any combination thereof, configured for the offboard management and control of the runway condition assessment and vehicle landing safety operations for a vehicle and/or a fleet of vehicles associated with an enterprise. In some embodiments, the RALS platform is configured as a distributed management system where one or more vehicles integrate with a respective onboard RALS system communicably coupled to the RALS system.

The RALS system is configured to employ ML model techniques configured to automatically ingest, parse, and/or compile runway condition data from various runway condition data sources and in various data formats in order to generate adjusted runway condition codes describing the surface conditions of various individual sections of a respective runway. The RALS system may be configured to host computations that are remotely configured, executed, and/or broadcast to one or more onboard RALS systems associated with one or more respective multiple vehicles associated with the RALS platform. The RALS system and one or more onboard RALS systems associated with one or more respective vehicles remain in constant contact and are configured to transmit and/or receive data related to the operation of the one or more vehicles via a communications network. The RALS system comprises one or more computing devices, one or more ML models, and/or one or more datastores configured to monitor and/or manage one or more vehicles.

"Onboard RALS system" refers to hardware, software, firmware, and/or a combination thereof, integrates with one or more vehicle systems and/or apparatuses associated with a vehicle related to the RALS platform. The onboard RALS system comprises, and/or integrates with, among other components, one or more electronic displays, an onboard datastore, one or more vehicle onboard systems, a vehicle apparatus, and/or one or more sensors configured to facilitate the safe landing of a vehicle on a runway. The onboard RALS system, in some contexts, integrates with, or is embodied by, a computing device such as a line replaceable unit (LRU). For example, the onboard RALS system in some contexts is embodied by an aerospace gateway LRU configured to communicate with one or more vehicle systems. In various embodiments, the onboard RALS system may integrate with, or is embodied by, a computing device such as a line replaceable unit (LRU) associated with a vehicle, a gateway computing device, a legacy computing device, a flight management system, a takeoff and landing data (TOLD) application, and/or any other combination of computing hardware and/or software associated the vehicle.

In this regard, the onboard RALS system associated with a respective vehicle may transmit one or more portions of data to one or more computing devices associated with the RALS system via a communications network. For example, the onboard RALS system in some embodiments is configured to transmit one or more portions of data related to operation of the vehicle and/or a current vehicle profile associated with the vehicle. In various embodiments, the onboard RALS system associated with a respective vehicle may transmit the one or more portions of data to the RALS system via a communications network.

In various embodiments, a RALS system apparatus of the RALS system may be configured to execute one or more operations associated with the onboard RALS system. For example, in various contexts, the RALS system apparatus may be configured to perform at least a portion of the processing associated with the onboard RALS system associated with a vehicle (e.g., an aerial vehicle). As such, the computational resources needed by the vehicle may be advantageously reduced. Furthermore, in some embodiments, the functionality of the RALS system is instead provided via the onboard RALS system for a particular vehicle (e.g., via an application instance associated with the RALS system).

"Vehicle profile" refers to an electronically managed data structure that includes data related to identification of a vehicle and/or an operational state of a vehicle and/or a subsystem thereof. Non-limiting examples of a vehicle profile includes data one or more portions of data representing at least one of a vehicle type, a vehicle identifier, a number of passengers, a total vehicle weight, a vehicle payload weight, a vehicle fuel level, and/or any descriptive data related to the vehicle such as the status of the vehicle, the systems of the vehicle, the personnel associated with the vehicle, and/or the mission of the vehicle.

"Vehicle operation data" refers to electronically managed data that indicates at least one aspect of an operational state of a vehicle or a particular subsystem thereof. Vehicle operation data in some embodiments includes data collected, measured, obtained, generated, and/or otherwise processed by the one or more vehicle systems associated with the vehicle. In various embodiments, one or more portions of vehicle operation data, in some contexts, is received from the RALS system via a communications network. In various embodiments, at least a portion of the vehicle operation data is based at least in part on vehicle sensor data collected, measured, calculated, and/or otherwise generated by one or more sensors associated with the vehicle.

"Vehicle sensor data" refers to electronically managed data utilized by a vehicle for operation and that is captured by at least one sensor onboard or otherwise communicable with the vehicle. Vehicle sensor data in some contexts includes, without limitation, any data collected, measured, calculated, and/or otherwise generated by one or more sensors associated with the vehicle.

"Runway data" refers to electronically managed data indicating one or more aspects, parameters, and/or descriptors of a runway. Non-limiting examples of runway data include at least one portion of data indicating at least one of a runway identifier, a runway length, a runway threshold, a landing usable runway length, and/or a runway surface type associated with the one or more runways. The landing usable runway length may be associated with a predetermined, safe landing rollout distance of a runway that is less than or equal to the length of the runway and may be used in vehicle landing calculations (e.g., TOLD calculations) to determine one or more required landing parameters and/or whether a required runway length is available for a respective vehicle attempting to land on the runway. In various examples, the landing usable runway length may be associated with a value corresponding to the difference of the runway length minus the runway threshold.

"Runway condition data" refers to electronically managed data that represents a runway surface condition associated with a plurality of sections of one or more runways. Runway condition data may be current data related to runway surfaces that are contaminated with water, slush, ice, snow, and/or solid contaminants (e.g., rubber residue from vehicle tires). Runway condition data may be configured in multiple discrete formats. For example, the runway condition data may be configured as a data object associated with one or more broadcast messages (e.g., NOTAMs, ATIS messages, etc.) and may comprise various portions of text data and/or numerical data configured to describe to the surface conditions of a particular runway. Additionally or alternatively, the runway condition data may be configured as raw data generated, for example, by one or more ground sensors associated with a particular runway. In various embodiments, runway condition data may be received, retrieved, aggregated, gathered, compiled, and/or otherwise collected from one or more runway condition data sources.

"Runway condition data source" refers to a data source configured to transmit, broadcast, display, portray, convey, describe, aggregate, compile, process, and/or otherwise make available one or more portions of runway condition data associated with one or more runways associated with a travel hub. A runway condition data source may be configured as one or more of one or more ground sensors associated with one or more respective runways, digital notices to airmen (NOTAMs), voice broadcasts, automated terminal information service (ATIS) messages, datalink messages, pilot reports (PIREPs), and/or prior vehicle landing deceleration profiles associated with one or more respective vehicles that recently landed on a respective runway.

A prior vehicle landing deceleration profile may comprise data about a vehicle touch down point and/or stop point on a runway, as well as a speed of the vehicle and/or the brake pressure applied at each section of a plurality of sections associated with a respective runway. In some embodiments, a prior vehicle landing deceleration profile may comprise data related to external wind speed and/or direction, as well as other relevant vehicle landing data such as vehicle power settings, vehicle type, the mass of the vehicle at the time of landing, and/or one or more portions of a vehicle profile associated with the vehicle. In various embodiments, a prior vehicle landing deceleration profile may be generated by an onboard RALS system associated with a vehicle that has recently landed on a respective runway.

"Runway condition model" refers to an ML model associated with a RALS system that generates one or more runway section condition data output corresponding to one or more portions of a runway. In various contexts, the runway condition model is configured as a deep learning neural network such as an artificial neural network, (ANN), recurrent neural network (RNN), convolutional neural network (CNN), and/or any other specialized deep learning neural network. In various contexts, the runway condition model is configured to generate runway section condition data output related to one or more sections of a respective runway based on one or more portions of runway condition data. Based on the runway section condition output data generated by the runway condition model, a RALS system apparatus associated with the runway condition model may be configured to determine a runway condition code associated with the one or more sections of the respective runway.

In various embodiments, a runway condition model associated with a RALS system may be configured to generate a confidence score associated with a runway condition code that has been determined for a particular section of runway. In various examples, the confidence score associated with a runway condition code is generated by the runway condition model based on at least one or more of validity scores associated with one or more portions of the runway condition data, runway section transition trends associated with the plurality of sections of the runway, ground operator input data generated by ground operators associated with the runway, prior vehicle landing deceleration profiles associated with one or more respective vehicles that recently landed on the runway, and/or vehicle operator confirmations generated by vehicle operators associated with the prior vehicle landing deceleration profiles.

In some embodiments, a runway condition model may be configured to generate a validity score associated with at least one portion of runway condition data aggregated from a plurality of runway condition data sources. In such embodiments, the validity score may be based on timestamp data associated with the at least one portion of the runway condition data. Furthermore, in some embodiments, a runway condition model may be configured to detect a runway section transition trend associated with the at least one section of a plurality of sections of a runway. A runway section transition trend describes a transition of the surface condition of the at least one section from a first state to a second state (e.g., from a wet state to a dry state, from a dry state to a snow-covered state, etc.). In various contexts, a runway section transition trend is generated based on ground sensor data generated by ground sensors associated with a runway collected over a predetermined periodicity of time (e.g., 1 hour, 2 hours, 4 hours, 8 hours, etc.).

A runway condition model, in some contexts, is iteratively retrained and/or otherwise updated based on data related to one or more vehicles associated with the RALS platform. For example, the runway condition model in some contexts is trained and/or retrained based in part on one or more portions of vehicle landing data (e.g., data associated with one or more prior vehicle landing deceleration profiles) related to one or more vehicles associated with one or more respective enterprises related to the RALS platform. Additionally or alternatively, the runway condition model, in some contexts, is also trained and/or retrained based in part on one or more portions of vehicle operator input data (e.g., input data received via a user interface associated with an application instance related to the RALS system), ground operator input data generated by ground operators associated with one or more respective runways, and/or runway condition data associated with one or more runway condition data sources.

"Runway" refers to a physical structure configured to facilitate the takeoff, landing, and/or other mobile operation of one or more types of vehicle. A runway may be constructed of one or more materials designed to support the one or more types of vehicle, and may be composed of asphalt, cement, packed dirt, and/or the like. A runway may be associated with various parameters including, but not limited to, a runway length, a runway threshold, or a runway surface type. In some embodiments, one or more runways associated with a particular travel hub may embody, integrate with, and/or otherwise be associated with one or more ground sensors configured to measure one or more parameters associated with the surface of the runway. For example, the one or more ground sensors may be configured to monitor, detect, determine, transmit, and/or otherwise manage data related to one or more contaminants (e.g., water, slush, ice, snow, and/or solid contaminants), respective depths and/or amounts of said contaminants, temperatures, and/or the like associated with various sections of the runway. In various examples, the one or more ground sensors are configured to transmit data to a RALS system apparatus of a RALS system.

"Travel hub" refers to an environment, space, or other physical location that is configured and/or otherwise arranged to serve in-bounding and/or out-bounding of one or more vehicles. A travel hub may comprise one or more runways configured to facilitate the landing of one or more types of vehicles. Non-limiting examples of travel hubs include airports, vertiports, helipads, hangars, vehicle fueling stations, vehicle pools, service stations, vehicle maintenance facilities, vehicle manufacturing facilities, vehicle sales facilities, and/or the like. A travel hub may embody, integrate with, and/or host one or more charging facilities, fueling facilities, commercial airline facilities, terminals, and/or the like.

"Vehicle" refers to any machine, apparatus, robot, or other mechanism that facilitates movement from a first location to a second location via any medium. A vehicle may traverse itself, move people, move goods, and/or otherwise traverse any of myriad of things. A vehicle in various contexts traverses through a medium of air, on land, and/or by sea. "Aerial vehicle" refers to any manned or unmanned vehicle capable of air travel. Non-limiting examples of an aerial vehicle include a passenger airplane, a helicopter, an unmanned aerial vehicle, an electric aerial vehicle, an electronic vertical takeoff or landing (eVTOL) aircraft, a jet, a drone, or a quadcopter. At least some aerial vehicles are controllable by systems onboard the aerial vehicle. At least some aerial vehicles are controllable by systems external from the aerial vehicle including, and without limitation, remote control systems, ground systems, and centralized control systems. In various embodiments, an aerial vehicle may be an electric aerial vehicle that is powered partially or completely by a battery system integrated with the electric aerial vehicle.

"Interface element" refers to any interactive element associated with a user interface configured to control, update, initiate, direct, manage, and/or otherwise cause operation of one or more computing devices to execute one or more of the operations described herein. For example, a user interface associated with a RALS system application instance may comprise various interface elements configured to execute various operations associated with a RALS system and/or or any relevant components associated with a RALS platform. Interface elements may be configured as hard-keyed and/or soft-keyed interactive elements associated with a user interface and/or a computing device associated with a RALS platform. Examples of interface elements include, but are not limited to, interactive buttons, sliders, hyperlinks, text fields, radio buttons, drop-down menus, interactive lists, touchscreen elements, radial switches, linear switches, and/or the like that are configured to cause execution of one or more portions of computer program code associated with the one or more techniques described herein.

"RALS system apparatus" refers to any computer, processor, circuitry, and/or other executor of computer instructions that is embodied in hardware, software, firmware, and/or any combination thereof. Non-limiting examples of a computing device include a computer, a processor, an application-specific integrated circuit, a field-programmable gate array, a personal computer, a smart phone, a laptop, a fixed terminal, a server, a networking device, and a virtual machine. In some embodiments, a RALS system apparatus is a computing device that is configured to execute and/or cause execution of the various operations associated with a RALS system described herein.

"User computing device" refers to a computing device associated with a person, company, or other organizational structure that controls one or more systems. In some embodiments, a user computing device is associated with particular administrative credentials that define access to operation via a particular system.

"Executable code" refers to a portion of computer program code stored in one or a plurality of locations that is executed and/or executable via one or more computing devices embodied in hardware, software, firmware, and/or any combination thereof. Executable code defines at least one particular operation to be executed by one or more computing devices. In some embodiments, a memory, storage, and/or other computing device includes and/or otherwise is structured to define any amount of executable code (e.g., a portion of executable code associated with a first operation and a portion of executable code associated with a second operation). Additionally or alternatively, in some embodiments, executable code is embodied by separate computing devices (e.g., a first datastore embodying first portion of executable code and a second datastore embodying a second portion executable code).

"Datastore," "database," and "data lake" refer to any type of non-transitory computer-readable storage medium. Non-limiting examples of a datastore, database, and/or data lake include hardware, software, firmware, and/or a combination thereof capable of storing, recording, updating, retrieving and/or deleting computer-readable data and information. In various embodiments, a datastore, database, and/or data lake in some contexts is a cloud-based storage system accessible via a communications network by one or more components of the various embodiments of the present disclosure.

"Data attribute" refers to electronically managed data representing a variable or particular criteria or property having a particular value or status. In some contexts the value is statically fixed or dynamically assigned. In some embodiments, a data attribute embodies a particular property of a data object.

"Data value" refers to electronically managed data representing a particular value for a particular data attribute, operational parameter, sensor device, and/or the like.

The phrases "in an embodiment," "in one embodiment," "according to one embodiment," and the like generally mean that the particular feature, structure, or characteristic following the phrase in some contexts is included in at least one embodiment of the present disclosure, and in some contexts is included in more than one embodiment of the present disclosure (importantly, such phrases do not necessarily refer to the same embodiment). The word "exemplary" is used herein to mean "serving as an example, instance, or illustration." Any implementation described herein as "exemplary" is not necessarily to be construed as preferred or advantageous over other implementations. If the specification states a component or feature "may," "may," "could," "should," "would," "preferably," "possibly," "typically," "optionally," "for example," "often," or "might" (or other such language) be included or have a characteristic, that particular component or feature is not required to be included or to have the characteristic. Such component or feature in some contexts is optionally included in some embodiments, or it in some contexts is excluded.

As used herein, the terms "data," "content," "digital content," "data object," "information," and similar terms may be used interchangeably to refer to data capable of being transmitted, received, and/or stored in accordance with embodiments of the present invention. Further, where a computing device is described herein to receive data from another computing device, it will be appreciated that the data may be received directly from another computing device or may be received indirectly via one or more intermediary computing devices, such as, for example, one or more servers, relays, routers, network access points, base stations, hosts, and/or the like, sometimes referred to herein as a "network." Similarly, where a computing device is described herein to send data to another computing device, it will be appreciated that the data may be sent directly to another computing device or may be sent indirectly via one or more intermediary computing devices, such as, for example, one or more servers, relays, routers, network access points, base stations, hosts, and/or the like.

### EXAMPLE SYSTEMS, APPARATUSES, AND DATAFLOWS OF THE DISCLOSURE

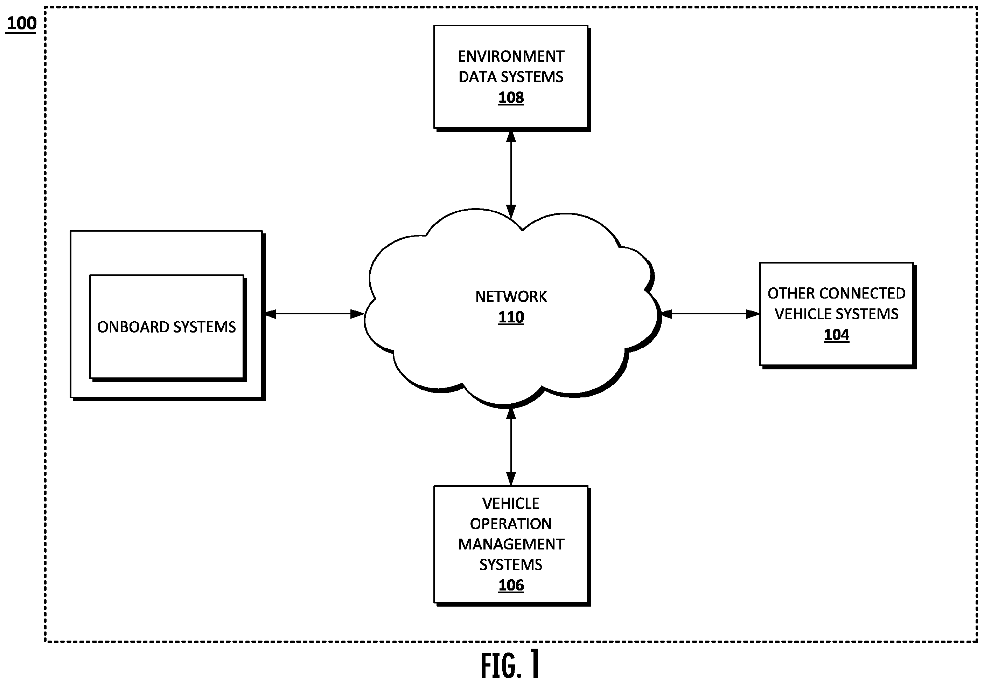

FIG. 1 illustrates an example system that enables enhanced runway condition assessment and vehicle landing safety techniques in accordance with at least some example embodiments of the present disclosure. Specifically, FIG. 1 depicts an example system 100 within which embodiments of the present disclosure may operate to provide enhanced runway condition assessment and vehicle landing safety techniques for a vehicle 112. As depicted, the system 100 includes vehicle onboard systems 102 associated with the vehicle 112. Additionally or alternatively, in some embodiments, the vehicle 112 is communicable (e.g., via the vehicle onboard systems 102) with one or more external computing devices and/or systems. For example, in some embodiments, the vehicle onboard systems 102 is optionally communicable with some or all of the other connected vehicle systems 104, vehicle operation management systems 106, and/or environment data systems 108. In some such embodiments, the vehicle onboard systems 102 communicates with the other connected vehicle systems 104, vehicle operation management systems 106, and/or environment data systems 108 via one or more specially configured communications networks, for example the network 110.

In some embodiments, the vehicle onboard systems 102 includes any number of computing devices and/or systems embodied in hardware, software, firmware, and/or a combination thereof, that control, operate, and/or otherwise function onboard a vehicle 112. For example, in some embodiments, the vehicle onboard systems 102 includes one or more physical components of the vehicle 112, including and without limitation one or more displays, flight management systems, vehicle operation management systems, engines, wings, props, motors, antennas, landing gear, braking systems, and/or the like. In some embodiments, the vehicle onboard systems 102 includes one or more sensors that gather, collect, and/or otherwise aggregates sensor data relevant to operation of the vehicle 112, associated with the vehicle 112, and/or otherwise associated with an environment of the vehicle 112.

Additionally or alternatively, in some embodiments, the vehicle onboard systems 102 includes one or more computing devices and/or systems embodied in hardware, software, firmware, and/or a combination thereof, that controls operation of one or more physical components of the vehicle 112. For example and without limitation, in some embodiments the vehicle onboard systems 102 includes computing devices and/or systems that control one or more displays, flight management systems, vehicle operation management systems, engines, wings, props, motors, antennas, landing gear, braking systems, sensors, and/or the like.

Additionally or alternatively, in some embodiments, the vehicle onboard systems 102 includes one or more computing devices and/or systems embodied in hardware, software, firmware, and/or a combination thereof, that generates and/or otherwise causes rendering of one or more user interfaces renderable to one or more displays onboard and/or otherwise associated with the vehicle 112. In some embodiments such computing devices and/or systems specially configure some or all elements of user interfaces to be rendered based at least in part on received data. It should be appreciated that the vehicle onboard systems 102 in some embodiments includes any of a myriad of specially configured computing devices and/or systems that enable the vehicle 112 to operate in a particular manner of airborne travel. For example, in various embodiments, the vehicle onboard systems 102 may include a primary flight display (PFD), an electronic flight bag (EFB), a flight management system (FMS), a gateway computing device, and/or the like. In various embodiments, the vehicle onboard systems 102 associated with a respective vehicle may be configured in a line replaceable unit (LRU).

In some embodiments, the vehicle onboard systems 102 includes one or more personal computers, end-user terminals, monitors, other displays, and/or the like. Additionally or alternatively, in some embodiments, the vehicle onboard systems 102 includes one or more data repository/data repositories embodied in hardware, software, firmware, and/or any combination thereof, to support functionality provided by the vehicle onboard systems 102. For example, in some embodiments, such data repositories provide data storage functionality on the same computing devices and/or other dedicated computing devices of the vehicle onboard systems 102. Additionally or alternatively still, in some embodiments, the vehicle onboard systems 102 includes one or more specially configured integrated systems, circuits, and/or the like that process data received by and/or control one or more other computing devices and/or systems, or physical components, associated with the vehicle 112.

The vehicle 112 may embody any of a myriad of aerial vehicle types. The vehicle 112 includes any number of physical components that enable air travel, including and without limitation props, rotors, engines, wings, and/or the like. Additionally or alternatively, the vehicle 112 includes any number of a myriad of controls for operating the physical components of the vehicle 112 to achieve such airborne travel. For example, in some embodiments, the vehicle 112 includes a forward-flying aerial vehicle. In some embodiments, the vehicle 112 includes a vertical takeoff and landing aerial vehicle. It will be appreciated that the vehicle 112 may be entirely manually controlled, semi-autonomous, fully autonomous for one or more operations, or any combination thereof. Non-limiting examples of a vehicle 112 include a plane generally, a helicopter, a drone, an electric vertical takeoff and landing aircraft (eVTOL), a prop-based aircraft, a jet, and/or the like.

The other connected vehicle systems 104 includes computing devices, systems, and/or onboard systems of other vehicles communicatively coupled with the vehicle 112 associated with vehicle onboard systems 102. It will be appreciated that the other connected vehicle systems 104 in some embodiments includes computing devices and/or systems of one or more other aerial vehicles of the same type operating within the same environment as the aerial vehicle associated with vehicle onboard systems 102. For example, in some embodiments some of the other connected vehicle systems 104 include computing devices and/or systems of other aerial vehicles in a fleet of a particular type of aerial vehicle. In some such embodiments, sensor data (for example) captured via such other connected vehicle systems 104 similarly may be applicable to the vehicle 112 as well. Additionally or alternatively, in some embodiments, the other connected vehicle systems 104 includes computing devices and/or systems of ground vehicles, other types of aerial vehicles, and/or the like, or any combination thereof.

In some embodiments, the vehicle onboard systems 102 receive data from one or more of the other connected vehicle systems 104 that provides additional context with respect to the environment in which the vehicle 112 associated with vehicle onboard systems 102 is operating. In some contexts, such data includes sensor data that the vehicle onboard systems 102 is able to capture, or in some embodiments includes sensor data not capturable by the vehicle onboard systems 102. For example, in some embodiments, the vehicle onboard systems 102 communicates with the other connected vehicle systems 104 to determine a position of other aerial vehicles, objects, environmental features (e.g., buildings, terrain, and/or the like) within the environment of the aerial vehicle associated with vehicle onboard systems 102, and/or the like. Additionally or alternatively, in some embodiments, the vehicle onboard systems 102 communicate with one or more of the other connected vehicle systems 104 to receive sensor data of a particular data type that is not capturable directly by the vehicle onboard systems 102. For example, in some embodiments, the aerial vehicle associated with the vehicle onboard systems 102 does not include a particular sensor for capturing a particular type of sensor data, and instead receives such data of the particular data type from the other connected vehicle systems 104.

In some embodiments, the vehicle operation management systems 106 includes one or more computing devices embodied in hardware, software, firmware, and/or the like that generate, assign, and/or maintain vehicle operation constraints (e.g., trip plan data, flight plan information, mission goals, etc.) for one or more aerial vehicles. For example, in some embodiments, the vehicle operation management systems 106 include computing devices and/or systems of an air traffic control system and/or other authoritative entity that assigns flight plan information to one or more aerial vehicles. Such information includes, without limitation, flight plan information embodying a visual sight rules (VFR) flight plan, an instrument flight rules (IFR) flight plan, a composite flight plan, and/or the like defining conditions for operating a vehicle 112 within a particular environment. In some embodiments, the vehicle operation management systems 106 captures and/or otherwise obtains particular data for relaying to the vehicle 112. For example, in some embodiments, the vehicle operation management systems 106 may receive, retrieve, gather, collect, manage, and/or otherwise obtain one or more portions of runway data associated with one or more runways and/or one or more portions of terminal hub data associated with one or more terminal hubs.

In some embodiments, the vehicle operation management systems 106 includes one or more application servers, end user terminals, personal computers, mobile devices, user devices, and/or the like that generate, assign, and/or transmit flight plan information to aerial vehicles. Additionally or alternatively, in some embodiments, the vehicle operation management systems 106 includes one or more data repository/repositories embodied in hardware, software, firmware, and/or a combination thereof, that stores flight plan information, links between flight plan information and particular aerial vehicles, and/or the like. In some such embodiments, the flight plan information includes navigational data, environmental data, weather data, and/or obstacle data for one or more environments within which an aerial vehicle is or will be operating. Additionally or alternatively, in some embodiments, the vehicle operation management systems 106 includes one or more computing devices and/or systems that detect and/or monitor operation of one or more aerial vehicles within an environment. For example, in some embodiments, the vehicle operation management systems 106 includes one or more radar systems that monitor one or more environments. In various embodiments, one or more portions of data associated with the vehicle operation management systems 106 may be stored in a datastore associated with the RALS platform.

The environment data systems 108 includes one or more computing devices and/or systems that monitor, capture, and/or otherwise store data representing one or more aspects of a real-world environment, objects therein, and/or aerial vehicles therein. In some embodiments, the environment data systems 108 includes one or more data repository/repositories that store weather and/or obstacle data for one or more environments. Additionally or alternatively, in some embodiments, the environment data systems 108 includes one or more data repository/repositories that store data embodying other environmental aspects that interact with or otherwise affect operation of aerial vehicles in an environment, for example the vehicle 112. In some embodiments, the environment data systems 108 includes a satellite system that monitors one or more aspects of an environment, for example a satellite weather provider and/or satellite radio provider to the vehicle 112. Additionally or alternatively still, in some embodiments, the environment data systems 108 embody or include a flight services data provider system (e.g., a Honeywell flight services system). In some embodiments, the environment data systems 108 embodies a subsystem of the vehicle operation management systems 106 and/or other connected vehicle systems 104.

In some embodiments, the environment data systems 108 includes one or more application servers, end user terminals, personal computers, mobile devices, user devices, and/or the like. Additionally or alternatively, in some embodiments, the environment data systems 108 includes one or more database servers specially configured to store data pushed from one or more other computing devices and/or systems. In some embodiments, the environment data systems 108 includes one or more remote and/or cloud computing devices accessible to the vehicle onboard systems 102, other connected vehicle systems 104, and/or vehicle operation management systems 106 over a communications network, such as the network 110. In various embodiments, one or more portions of data associated with the environment data systems 108 may be stored in a datastore associated with the RALS platform.

In some embodiments the network 110 enables communication between various computing devices and/or systems utilizing one or more combinations of wireless and/or wired data transmission protocols. In this regard, the network 110 in some contexts embodies any of a myriad of network configurations. In some embodiments, the network 110 embodies a public network (e.g., the Internet) in whole or in part. In some embodiments, the network 110 embodies a private network (e.g., an internal network between particular computing devices) in whole or in part. Additionally or alternatively, in some embodiments the network 110 embodies a direct or private connection facilitated over satellite or radio systems that enables long-range communication between aerial vehicles and corresponding grounded systems. In some other embodiments, the network 110 embodies a hybrid network (e.g., a network enabling internal communications between particular connected computing devices and external communications with other computing devices).

The network 110 in some embodiments includes one or more base stations, relays, routers, switches, cell towers, communications cables, satellites, radio antennas and/or related control systems, and/or associated routing stations, and/or the like. In some embodiments, the network 110 includes one or more user entity-controlled computing devices and/or other enterprise devices (e.g., an end-user's or enterprise router, modem, switch, and/or other network access point) and/or one or more external utility devices (e.g., Internet service provider communication towers, cell towers, and/or other devices). In some embodiments, the vehicle onboard systems 102 communicates with one or more of the other connected vehicle systems 104, vehicle operation management systems 106, environment data systems 108 over the network 110 to receive and/or transmit the data described herein for generating the user interfaces for providing to one or more displays of an aerial vehicle. In some embodiments, the network 110 embodies a datalink uplink to the vehicle 112 (e.g., via the vehicle onboard systems 102) that communicatively couple the airborne systems to the ground systems.

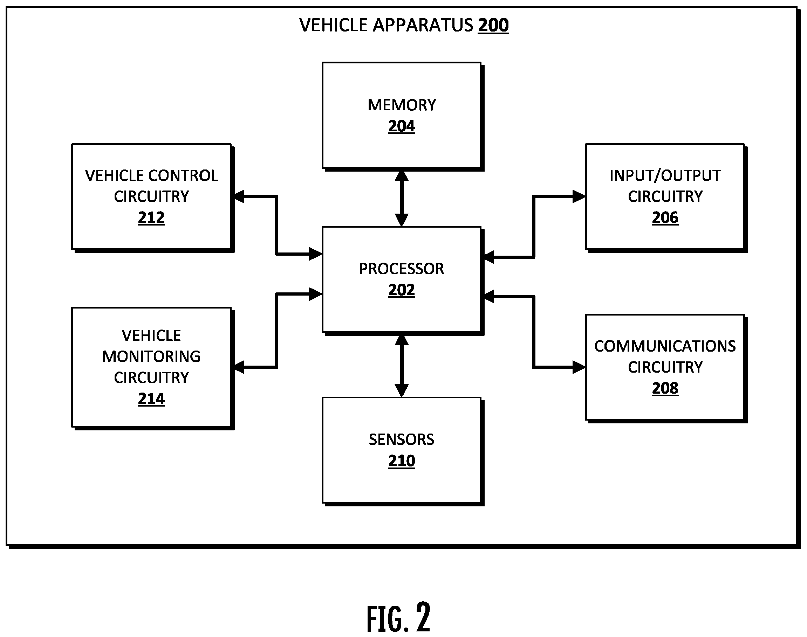

FIG. 2 illustrates an example vehicle apparatus in accordance with at least some example embodiments of the present disclosure. Specifically, FIG. 2 depicts a vehicle apparatus 200. In some embodiments, one or more computing devices and/or systems of a vehicle (e.g., a vehicle 112), for example included in or embodied by the vehicle onboard systems 102 onboard a vehicle 112, is embodied by one or more computing devices such as the vehicle apparatus 200 as depicted and described in FIG. 2. As depicted, the vehicle apparatus 200 includes a processor 202, memory 204, input/output circuitry 206, communication circuitry 208, sensors 210, vehicle control circuitry 212, and/or vehicle monitoring circuitry 214. In some embodiments, the vehicle apparatus 200 is configured, using one or more of the sets of circuitry embodying processor 202, memory 204, input/output circuitry 206, communication circuitry 208, sensors 210, vehicle control circuitry 212, and/or vehicle monitoring circuitry 214, to execute one or more operations described herein.

Although components are described with respect to functional limitations, it should be understood that the particular implementations necessarily include the use of particular computing hardware. It should also be understood that in some embodiments certain of the components described herein include similar or common hardware. For example, two sets of circuitry may both leverage use of the same processors, network interfaces, storage mediums, and/or the like, to perform their associated functions, such that duplicate hardware is not required for each set of circuitry. The use of the term "circuitry" as used herein with respect to components of the apparatuses described herein should therefore be understood to include particular hardware configured to perform the functions associated with the particular circuitry as described herein.

Particularly, the term "circuitry" should be understood broadly to include hardware and, in some embodiments, software for configuring the hardware. For example, in some embodiments, "circuitry" includes processing circuitry, storage media, network interfaces, input/output devices, and/or the like. Additionally or alternatively, in some embodiments, other elements of the vehicle apparatus 200 provide or supplement the functionality of another particular set of circuitry. For example, the processor 202 in some embodiments provides processing functionality to any of the other sets of circuitry, the memory 204 provides storage functionality to any of other the sets of circuitry, the communication circuitry 208 provides network interface functionality to any of the other sets of circuitry, and/or the like.

In some embodiments, the processor 202 (and/or co-processor or any other processing circuitry assisting or otherwise associated with the processor) is/are in communication with the memory 204 via a bus for passing information among components of the vehicle apparatus 200. In some embodiments, for example, the memory 204 is non-transitory and includes for example, one or more volatile and/or non-volatile memories. In other words, for example, the memory 204 in some embodiments includes or embodies an electronic storage device (e.g., a computer readable storage medium). In some embodiments, the memory 204 is configured to store information, data, content, applications, instructions, or the like, for enabling the vehicle apparatus 200 to carry out various functions in accordance with example embodiments of the present disclosure. Furthermore, in various embodiments, the memory 204 is configured to store one or more portions of data related to a datastore associated with a RALS platform associated with a vehicle embodying a respective vehicle apparatus 200.

In various embodiments, the processor 202 is embodied in a number of different ways. For example, in some example embodiments, the processor 202 includes one or more processing devices configured to perform independently. Additionally or alternatively, in some embodiments, the processor 202 includes one or more processors configured in tandem via a bus to enable independent execution of instructions, pipelining, and/or multithreading. The use of the terms "processor" and "processing circuitry" should be understood to include a single core processor, a multi-core processor, multiple processors internal to the vehicle apparatus 200, and/or one or more remote or "cloud" processors external to the vehicle apparatus 200.

In an example embodiment, the processor 202 is configured to execute instructions stored in the memory 204 or otherwise accessible to the processor 202. Additionally or alternatively, the processor 202 in some embodiments is configured to execute hard-coded functionality. As such, whether configured by hardware or software methods, or by a combination thereof, the processor 202 represents an entity (e.g., physically embodied in circuitry) capable of performing operations according to an embodiment of the present disclosure while configured accordingly. Additionally or alternatively, as another example in some example embodiments, when the processor 202 is embodied as an executor of software instructions, the instructions specifically configure the processor 202 to perform the algorithms embodied in the specific operations described herein when such instructions are executed.

As one particular example embodiment, the processor 202 is configured to perform various operations associated with executing one or more recommendations generated by the runway condition model, for example as described with respect to operating and/or reconfiguring the vehicle onboard systems 102 in FIG. 1 and/or as described further herein. In some embodiments, the processor 202 includes hardware, software, firmware, and/or a combination thereof, that receives and/or generates data including one or more portions of vehicle performance data, vehicle sensor data, environmental data, logistical data, and/or data related to one or more adverse situations impacting the operation of a vehicle (e.g., a vehicle 112).

Additionally or alternatively, in some embodiments, the processor 202 includes hardware, software, firmware, and/or a combination thereof, that causes rendering of one or more portions of data generated by the runway condition model via one or more electronic interfaces associated with the vehicle apparatus 200 and/or one or more electronic interfaces associated with other computing devices related to the RALS platform (e.g., an RALS system apparatus associated with the RALS system). Additionally or alternatively, in some embodiments, the processor 202 includes hardware, software, firmware, and/or a combination thereof, that in real-time updates rendering of a user interface and/or interface elements thereof in response to updated data related to the surface conditions of one or more sections of a particular runway such as, for example, one or more adjusted runway condition codes automatically provision into one or more of the vehicle onboard systems 102.

In some embodiments, the vehicle apparatus 200 includes input/output circuitry 206 that provides output to the user and, in some embodiments, to receive an indication of a user input (e.g., user input generated by a pilot, operator, crew member, and/or passenger). In some embodiments, the input/output circuitry 206 is in communication with the processor 202 to provide such functionality. The input/output circuitry 206 in some contexts comprises one or more user interfaces and, in some embodiments, includes a display that comprises the interfaces rendered as a web user interface, an application user interface, a user device, a backend system, or the like. In some embodiments, the input/output circuitry 206 also includes a keyboard, a mouse, a joystick, a touch screen, touch areas, soft keys a microphone, a speaker, or other input/output mechanisms.

The processor 202, and/or input/output circuitry 206 comprising a processor, in some embodiments is configured to control one or more functions of one or more user interface elements through computer program instructions (e.g., software and/or firmware) stored on a memory accessible to the processor 202 (e.g., memory 204, and/or the like). In some embodiments, the input/output circuitry 206 includes or utilizes a user-facing application to provide input/output functionality to a computing device and/or other display associated with a user. In some embodiments, the input/output circuitry 206 includes a primary flight display and/or a multi-function display of an aerial vehicle. Additionally or alternatively, in some embodiments, the input/output circuitry 206 includes one or more software-rendered user interfaces including interface elements that depict particular data and/or information, and/or that receive user input.

The communication circuitry 208 includes any means such as a device or circuitry embodied in either hardware or a combination of hardware and software that is configured to receive and/or transmit data from/to a communications network and/or any other computing device, circuitry, or module in communication with the vehicle apparatus 200. In this regard, the communication circuitry 208 includes, for example in some embodiments, a network interface for enabling communications with a wired or wireless communications network. Additionally or alternatively in some embodiments, the communication circuitry 208 includes one or more network interface cards, antennas, buses, switches, routers, modems, and supporting hardware, firmware, and/or software, or any other device suitable for enabling communications via one or more communications networks. Additionally or alternatively, the communication circuitry 208 includes circuitry for interacting with the antennas and/or other hardware or software to cause transmission of signals via the antennas or to handle receipt of signals received via the antennas. In some embodiments, the communication circuitry 208 enables transmission to and/or receipt of data from one or more computing devices and/or systems of other connected vehicle systems 104, vehicle operation management systems 106, and/or environment data systems 108, in communication with the vehicle apparatus 200.

The sensors 210 includes hardware, software, firmware, and/or a combination thereof, that supports generation, capturing, aggregating, retrieval, and/or receiving of one or more portions of sensor data. In some embodiments, the sensors 210 includes one or more discrete components of a vehicle (e.g., a vehicle 112). The sensors 210 in some embodiments are affixed to, within, and/or otherwise as a part of an aerial vehicle including or otherwise associated with the vehicle apparatus 200. For example, in some embodiments, one or more of the sensors 210 is/are mounted to the aerial vehicle, such as the vehicle 112. Non-limiting examples of sensors 210 include altimeters (e.g., radio and/or barometric), pressure sensors, pilot tubes, anemometers, image cameras, video cameras, infrared sensors, speed sensors, battery sensors, fuel level sensors, biological sensors and/or the like. In some embodiments, the sensors 210 are integrated with, or embodied by, one or more of the vehicle onboard systems 102 such that the sensors 210 generate, collect, monitors, and/or otherwise obtain data related to the one or more vehicle onboard systems 102.

In some embodiments, the sensors 210 additionally or alternatively include any of a myriad of sensors conventionally associated with drones, helicopters, and/or other urban air mobility aerial vehicles. Additionally or alternatively, in some embodiments, the sensors 210 include one or more high-sensitivity sensors to facilitate enable high accuracy capturing of data in certain circumstances. For example, in some embodiments, the sensors 210 includes one or more high-sensitivity sensors that capture detailed data while an aerial vehicle is in flight. Such higher fidelity sensors in some contexts supplement and/or, in other embodiments, replace the data captured by such sensors with lower fidelity.

In some embodiments, the sensors 210 includes hardware, software, firmware, and/or a combination thereof, embodying one or more navigation sensors. In some embodiments, the navigation sensors include a global positioning satellite (GPS) tracking chip and/or the like enabling location services to be requested and/or determined for a particular aerial vehicle. Additionally or alternatively, in some embodiments, the sensors 210 includes hardware, software, firmware, and/or any combination thereof, embodying inertial navigation sensors that measures speed, acceleration, orientation, and/or position-related data in a 3D environment. Additionally or alternatively, in some embodiments, the sensors 210 includes one or more cameras associated with a synthetic vision system (SVS). In some such embodiments, such an SVS camera captures image data representations of the real-world environment around an aerial vehicle for use in generating corresponding user interfaces depicting he captured image data, augmenting such image data, and/or otherwise providing data to enable an operator to acquire situational awareness based at least in part on the captured image data. It will be appreciated that, in some embodiments, the sensors 210 includes a separate processor, specially configured field programmable gate array (FPGA), or a specially programmed application specific integrated circuit (ASIC).

The vehicle control circuitry 212 includes hardware, software, firmware, and/or a combination thereof, that supports functionality associated with navigating and/or controlling a vehicle (e.g., a vehicle 112). In some embodiments, vehicle control circuitry 212 may control and/or configure one or more of the vehicle onboard systems 102. In some embodiments, vehicle control circuitry 212 includes hardware, software, firmware, and/or a combination thereof, that receives trip plan data (e.g., trip plan data embodying a flight plan), location services data representing a location of a vehicle 112, and/or the like. Additionally or alternatively, in some embodiments, the vehicle control circuitry 212 includes hardware, software, firmware, and/or a combination thereof, that depicts interface elements representing at least a flight path or indication where the vehicle 112 is currently traveling and/or should travel.

Additionally or alternatively, in some embodiments, the vehicle control circuitry 212 includes hardware, software, firmware, and/or a combination thereof, that autonomously controls one or more components of an aerial vehicle. In some such embodiments, the vehicle control circuitry 212 autonomously controls one or more physical components of a vehicle (e.g., a vehicle 112) to facilitate movement of the vehicle along a particular path. Additionally or alternatively, in some embodiments, the vehicle control circuitry 212 includes hardware, software, firmware, and/or a combination thereof, that semi-autonomously controls one or more components of an aerial vehicle, for example where certain aspects of the operation of the aerial vehicle are autonomously performed and others (e.g., directional control) is/are controlled by a user (e.g., a pilot).

Additionally or alternatively, in some embodiments, the vehicle control circuitry 212 includes hardware, software, firmware, and/or a combination thereof, that receives pilot input for controlling one or more components of an aerial vehicle, for example via vehicle flight controls to alter speed and/or direction of the aerial vehicle. Additionally or alternatively, in some embodiments, the vehicle control circuitry 212 includes hardware, software, firmware, and/or a combination thereof, that causes changes to an operational mode (e.g., an alternate, energy-conserving operational mode) of an aerial vehicle, for example autonomously based at least in part on one or more data-driven adverse situations and/or triggers, or in response to user input initiating the change in operational mode. It will be appreciated that, in some embodiments, the vehicle control circuitry 212 includes a separate processor, specially configured field programmable gate array (FPGA), or a specially programmed application specific integrated circuit (ASIC).

The vehicle monitoring circuitry 214 includes hardware, software, firmware, and/or a combination thereof, that supports functionality associated with the onboard RALS system associated with a vehicle (e.g., a vehicle 112). For example, the vehicle monitoring circuitry 214 executes, at least in part, one or more portions of program code associated with the methods and operations of the onboard RALS system. For example, the vehicle monitoring circuitry 214 includes hardware, software, firmware, and/or a combination thereof, that may receive, generate, analyze and/or otherwise process one or more portions of data input comprising runway data, runway condition data, vehicle performance data, vehicle sensor data, vehicle operation data, vehicle system data, air traffic data, environmental data, logistical data, personnel data, and/or any other relevant data related to a particular vehicle (e.g., a vehicle 112).

Additionally, the vehicle monitoring circuitry 214 includes hardware, software, firmware, and/or a combination thereof, that may cause the storage of one or more portions of data associated with the onboard RALS system. Additionally or alternatively, the vehicle monitoring circuitry 214 includes hardware, software, firmware, and/or a combination thereof, that may interface with, control, configure, and/or otherwise operate one or more legacy vehicle systems, legacy software, and/or legacy hardware associated with a vehicle (e.g., a vehicle 112) based at least in part on model output (e.g., recommendations) generated by the runway condition model.

It will be appreciated that, further in some embodiments, two or more of the sets of circuitries 202-214 are combinable. Additionally or alternatively, in some embodiments, one or more of the sets of circuitry 202-214 perform some or all of the functionality described associated with another component. For example, in some embodiments, one or more of the sets of circuitry 202-214 are combined into a single component embodied in hardware, software, firmware, and/or a combination thereof. For example, in some embodiments, two or more of the vehicle control circuitry 212 and vehicle monitoring circuitry 214 are embodied by a single set of circuitry that performs the combined operations of the individual sets of circuitry. Similarly, in some embodiments, one or more of the sets of circuitry, for example vehicle control circuitry 212 and/or vehicle monitoring circuitry 214 is/are combined with the processor 202, such that the processor 202 performs one or more of the operations described above with respect to each of these other sets of circuitry.

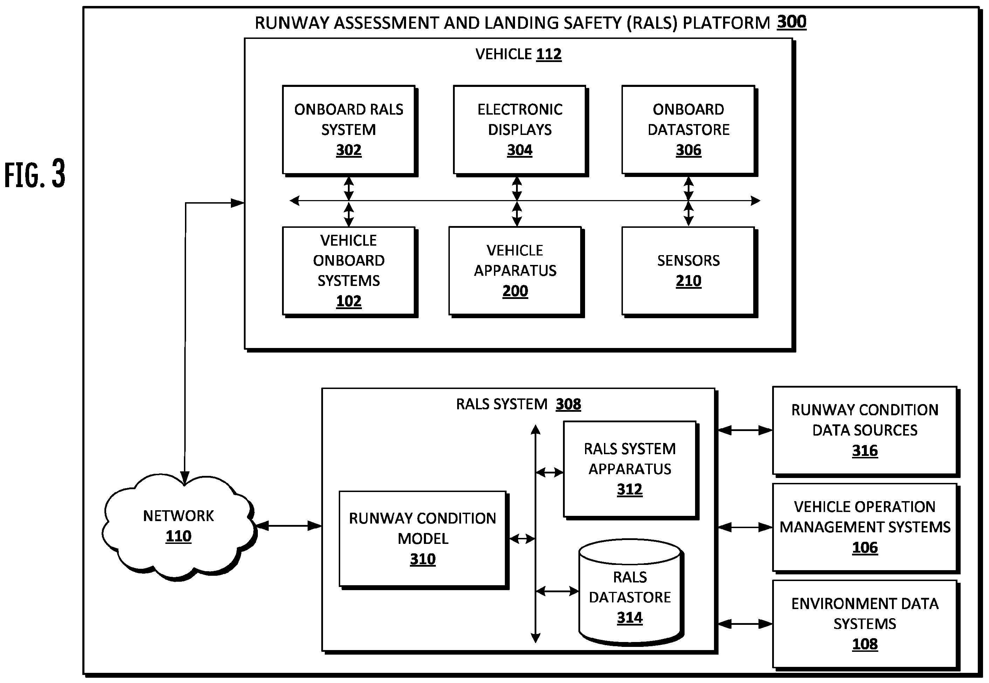

FIG. 3 illustrates an example RALS platform 300 in accordance with at least some example embodiments of the present disclosure. As shown, FIG. 3 depicts the various operational services, systems, components, apparatuses, and datastores embodied by the RALS platform 300. For example, the RALS platform 300 includes a RALS system 308 comprising a runway condition model 310, an RALS system apparatus 312 and/or a RALS datastore 314. In various embodiments, the RALS system 308 integrates and/or communicates with one or more runway condition data sources 316, one or more vehicle operation management systems 106 and/or one or more environment data systems 108. In various embodiments, the RALS system 308, runway condition data sources 316, vehicle operation management systems 106 and/or environment data systems 108, in some contexts, communicate via the network 110.

The RALS platform 300 also comprises an onboard RALS system 302 embodied by the vehicle 112. In various embodiments, the onboard RALS system 302 in some contexts integrates with, or is embodied by, the vehicle apparatus 200. Additionally or alternatively, in various contexts, the onboard RALS system 302 integrates with the vehicle onboard systems 102 and/or the sensors 210 associated with the vehicle 112. In various embodiments, the RALS system 308 communicates with the onboard RALS system 302 via the network 110. For example, the RALS system 308 communicates with the onboard RALS system 302 through one or more of the component parts of the RALS system apparatus 312 (e.g., communication circuitry) and one or more component parts of the vehicle apparatus 200 (e.g., communication circuitry 208) via the network 110.

Due to the distributed nature of the various embodiments of the present disclosure, the RALS platform 300 and the operational systems and/or services comprised therein, in some contexts, are configured to freely pass data via one or more communications networks (e.g., network 110) in order to optimally delegate one or more operations described herein to one or more respective computing devices associated with the RALS platform 300. This delegation of operations provides the benefit of optimizing the capabilities of a particular vehicle (e.g., a particular vehicle 112) based at least in part on the processing power associated with the particular vehicle. As will be appreciated, the delegation of certain methods, procedures, calculations, computations, configurations, predictions, and/or the like throughout the distributed operational systems and/or services of the RALS platform 300 reduces the load on the vehicle onboard systems 102 of the vehicle as well as the load on the computing devices (e.g., the RALS system apparatus 312) of the RALS system 308.

The RALS platform 300 may comprise various data storage systems deployed in various configurations. As defined herein, a database and/or datastore (e.g., RALS datastore 314) in some contexts is any type of non-transitory computer-readable storage medium. Non-limiting examples include hardware, software, firmware, and/or a combination thereof capable of storing, recording, updating, retrieving, deleting, and/or managing computer-readable data and information related to the RALS platform 300.

In various embodiments, one or more databases may be embodied by a vehicle 112 and/or associated with the onboard RALS system 302 such as, for example, the onboard datastore 306. In some contexts, one or more databases (e.g., the onboard datastore 306) embodied by a vehicle 112 may be accessible via a communications network (e.g., the network 110) by one or more components of the various embodiments of the present disclosure (e.g., the RALS system apparatus 312). In various embodiments, a database and/or datastore (e.g., onboard datastore 306 and/or RALS datastore 314) in some contexts is a cloud-based storage system accessible via a communications network (e.g., the network 110) by one or more components of the various embodiments of the present disclosure.

As described herein, the onboard RALS system 302 of a respective vehicle (e.g., a vehicle 112) integrates with one or more electronic displays 304, an onboard datastore 306, the vehicle onboard systems 102, the vehicle apparatus 200, and/or the sensors 210. The onboard RALS system 302 is configured to manage the various onboard runway surface condition assessment and vehicle landing safety operations of a respective vehicle. In some embodiments, the onboard RALS system 302 embodies and/or integrates with an application instance configured to integrate with one or more vehicle systems and/or apparatuses associated with a vehicle managed by the RALS platform 300. As such, one or more onboard RALS systems 302 associated with one or more vehicles may enable the RALS system 308 to function as a centralized system for facilitating the runway condition assessment and landing safety for the one or more vehicles.

The onboard RALS system 302, in some contexts, may integrate with, or be embodied by, a computing device such as a line replaceable unit (LRU) associated with a vehicle 112, a gateway computing device, a legacy computing device, a flight management system, a takeoff and landing data (TOLD) application, and/or any other combination of computing hardware and/or software associated the vehicle. For example, the onboard RALS system 302 in some contexts is embodied by an aerospace gateway LRU configured to communicate with one or more vehicle systems. The RALS system 308 and one or more onboard RALS systems 302 associated with one or more respective vehicles 112 remain in constant communication and are configured to transmit and/or receive data related to the operation of the one or more vehicles via a communications network (e.g., network 110).

In this regard, the onboard RALS system 302 in some contexts generates and transmits one or more portions of data to the RALS system 308 via the communications network. The one or more portions of data may include, but are not limited to, one or more portions of data related to operation of the vehicle 112 and/or a current vehicle profile associated with the vehicle 112. In various embodiments, the vehicle profile may comprise data related at least one or more of a vehicle type, a vehicle identifier, a number of passengers, a total vehicle weight, a vehicle payload weight, a vehicle fuel level, and/or any descriptive data related to the vehicle 112 such as the status of the vehicle 112, the systems of the vehicle 112, the personnel associated with the vehicle 112, and/or the mission of the vehicle 112.

The electronic displays 304 associated with the onboard RALS system 302 may comprise, in various contexts, one or more cockpit displays, one or more vertical situation displays (VSDs), one or more PFDs, one or more displays associated with an FMS, one or more displays associated with a navigation system, one or more displays associated with one or more respective LRUs, one or more computer displays, and/or the like. In various contexts, the one or more electronic displays 304 may be associated with one or more computing devices associated with the RALS system 308. In various contexts, the electronic displays 304 may be configured to display a user interface related to an application instance associated with the RALS system 308.

The onboard datastore 306 is configured to store and/or manage one or more portions of data related to runway data, runway condition data, runway condition codes, vehicle operation data, vehicle sensor data, vehicle state data, vehicle profile data, and/or the like. In various embodiments, the onboard datastore 306 may be embodied by a vehicle 112 and/or associated with the onboard RALS system 302 associated with the vehicle 112. In various contexts, the onboard datastore 306 may receive one or more portions of data related to a particular vehicle 112 via the network 110. Furthermore, the one or more portions of aforementioned data may be associated with a vehicle identifier of a respective vehicle 112.

As described herein, in various embodiments, the RALS platform 300 comprises an RALS system 308 configured for facilitating the runway condition assessment and vehicle landing safety operations for a fleet of vehicles associated with an enterprise. In this regard, the RALS platform 300 is configured as a distributed management system such that one or more vehicles integrate with a respective onboard RALS system 302 communicably coupled to the RALS system 308. The RALS system 308, in conjunction with a particular instance of the onboard RALS system 302 associated with a particular vehicle 112, is configured to monitor, manage, and/or improve the performance of the particular vehicle by providing enhance runway condition assessment and vehicle landing safety to one or more operators associated with the particular vehicle. The RALS system 308 and one or more onboard RALS systems 302 associated with one or more respective vehicles 112 remain in constant contact and are configured to transmit and/or receive data related to the operation of the one or more vehicles via the network 110. The RALS system 308 comprises one or more computing devices (e.g., the RALS system apparatus 312), one or more ML models, and/or one or more datastores (e.g., the RALS datastore 314) configured to monitor and/or manage one or more vehicles 112.

In various contexts, the RALS system 308 is configured to determine, based in part on runway data associated with a particular runway, a plurality of sections associated with the runway. For example, in some contexts, a runway may be divided into three sections associated with a landing procedure of a vehicle including a touchdown section (e.g., a target section upon which a vehicle initiates contact with the runway during a landing procedure), a midpoint section (e.g., a section in which the vehicle engages one or more braking systems in order to slow or stop the vehicle), and a rollout section (e.g., a section in which the vehicle completes the landing procedure and exits the runway in order to taxi to a respective location at a travel hub) respectively. Additionally or alternatively, the RALS system 308 may be configured to determine that a runway has been divided into two or more respective sections that are not explicitly associated with a landing procedure of a vehicle (e.g., sections that are not explicitly associated with a touchdown, midpoint, and/or rollout associated with a landing procedure). For example, in order to facilitate the safe landing of large vehicles (e.g., large cargo aircraft, intercontinental aircrafts, etc.), a particular runway may be divided into ten sections. Additionally or alternatively, in various embodiments, the RALS system 308 may determine one or more sub-sections of a particular runway in order to more accurately determine one or more required landing parameters for a particular vehicle 112. For example, in some contexts, ground sensor data (e.g., runway surface condition data obtained by one or more ground sensors) associated with a sub-section of a runway in between two defined sections of the runway (e.g., between a midpoint section and a rollout section) may be used by the RALS system 308 to determine a required runway length (e.g., a require landing distance) for a particular vehicle 112 executing a landing procedure.

In various contexts, the runway condition model 310 is configured as a deep learning neural network such as an artificial neural network, (ANN), recurrent neural network (RNN), convolutional neural network (CNN), and/or any other specialized deep learning neural network. In various contexts, the runway condition model is configured to generate runway section condition data output related to one or more sections of a respective runway based on one or more portions of runway condition data. Based on the runway section condition output data generated by the runway condition model 310, a RALS system apparatus 312 associated with the runway condition model 310 may be configured to determine a runway condition code associated with the one or more sections of the respective runway.

In some embodiments, the runway condition model 310 may be configured to receive runway condition data from a RALS system apparatus 312 associated with the RALS system 308. In various embodiments, the runway condition model 310 may be configured to generate runway section condition data output related to one or more sections of a respective runway based on the runway condition data. In this regard, the RALS system apparatus 312 may be configured to determine, based on the runway section condition output data generated by the runway condition model, a runway condition code associated with the one or more sections of the respective runway. As described herein, in various embodiments, a runway condition code may be associated with the runway condition assessment matrix (RCAM) curated by the international civil aviation organization (ICAO).

In various embodiments, a runway condition model 310 associated with a RALS system 308 may be configured to generate a confidence score associated with a runway condition code that has been determined for a particular section of runway. In various examples, the confidence score associated with a runway condition code is generated by the runway condition model 310 based on at least one or more of validity scores associated with one or more portions of the runway condition data, runway section transition trends associated with the plurality of sections of the runway, ground operator input data generated by ground operators associated with the runway, prior vehicle landing deceleration profiles associated with one or more respective vehicles 112 that recently landed on the runway, and/or vehicle operator confirmations generated by vehicle operators associated with the prior vehicle landing deceleration profiles.

In some embodiments, a runway condition model 310 may be configured to generate a validity score associated with at least one portion of runway condition data aggregated from a plurality of runway condition data sources. In such embodiments, the validity score may be based on timestamp data associated with the at least one portion of the runway condition data. Furthermore, in some embodiments, a runway condition model 310 may be configured to detect a runway section transition trend associated with the at least one section of a plurality of sections of a runway. A runway section transition trend describes a transition of the surface condition of the at least one section from a first state to a second state (e.g., from a wet state to a dry state, from a dry state to a snow-covered state, etc.). In various contexts, a runway section transition trend is generated based on ground sensor data generated by ground sensors associated with a runway collected over a predetermined periodicity of time (e.g., 1 hour, 2 hours, 4 hours, 8 hours, etc.).

Furthermore, the runway condition model 310 associated with the RALS system 308 may be configured to generate an adjusted runway condition code for a particular section of a runway based on a confidence score associated with a runway condition code that was initially determined for the particular section of the runway. For example, if a particular section of a runway is initially associated with a runway condition code of 4 (e.g., indicating -15°C (5°F) and colder outside air temperatures and/or compacted snow on the runway) but the runway condition model 310 determines that the initial runway condition code has a low confidence score, the runway condition model 310 may downgrade the initial runway condition code of 4 and generate an adjusted runway condition code of 3 (e.g., indicating slippery wet conditions, dry snow or wet snow on top of compacted snow, more than 3mm of wet or dry snow, or higher than -15°C (5°F) outside air temperatures with compacted snow on the runway) for the particular section of the runway. As such, the RALS system 308 may employ the adjusted runway condition code while determining the required landing parameters for the particular section of runway. In this way, the RALS system 308 may ensure that an appropriate (e.g., safe) required runway length is computed for a respective vehicle executing a landing procedure on the runway.

Alternatively, in various examples, if a particular section of a runway is initially associated with a runway condition code of 4, but the runway condition model 310 determines that the initial runway condition code has a low confidence score, the runway condition model 310 may upgrade the initial runway condition code of 4 and generate an adjusted runway condition code of 5 (e.g., indicating frost, wet or damp surface conditions of 1/8 inch (3mm) depth or less, or 1/8 (3mm) depth or less of slush, dry snow, or wet snow) for the particular section of the runway. As such, the RALS system 308 may employ the adjusted runway condition code while determining the required landing parameters for the particular section of runway. In this way, the RALS system 308 may ensure that an appropriate (e.g., efficient) required runway length is computed for a respective vehicle executing a landing procedure on the runway.

In this regard, the runway condition model 310 is configured to determine whether to generate adjusted runway condition codes based on downgrading or upgrading initial runway condition codes for respective sections of runway that are associated with low confidence scores. In various contexts, the runway condition model 310 may determine whether to downgrade or upgrade an initial runway condition code associated with a respective section of a runway based on a runway section transition trend associated with a changing surface condition of the respective section of the runway. Furthermore, in various examples, the runway condition model 310 may update one or more adjusted runway condition codes for various sections of a runway in real-time based on updated runway condition data aggregated from various runway condition data sources. The updated runway condition data may comprise at least one portion of data associated with one or more factors affecting a current runway surface condition of one or more sections of the runway for which the vehicle is to land upon. For example, the updated runway condition data may comprise data related to at least one of one or more runway section transition trends associated with the respective sections of the runway, current ground sensor data being generated by one or more ground sensors associated with the runway, newly received messages (e.g., NOTAMs, ATISs, etc.), and/or the like.

In various embodiments, the RALS system 308 may be configured to cause the automatic provision of one or more adjusted runway condition codes into one or more computing devices and/or software applications associated with a respective vehicle 112. For example, the RALS system 308 may be configured to cause the automatic provision of one or more adjusted runway condition codes into a flight management system (FMS), TOLD application, RALS system application instance associated with an onboard RALS system 302, vehicle onboard system, and/or vehicle apparatus 200 associated with the respective vehicle 112. In this regard, the RALS system apparatus 312 associated with the RALS system 308 may be configured to cause the dynamic configuration of a user interface associated with the one or more computing devices and/or software applications based on at least one section of a plurality of sections of a runway corresponding to one or more adjusted runway condition codes.

In this regard, in various embodiments, the RALS system 308, in conjunction with one or more components of the RALS platform 300 (e.g., the onboard RALS system 302, vehicle apparatus 200, RALS system apparatus 312, and/or the like), may be configured to determine a plurality of required landing parameters for each section of a plurality of sections of a particular runway. For example, the RALS system 308 may be configured to determine, based on a combination of runway data associated with the particular runway, vehicle profile data associated with a vehicle 112, and/or one or more adjusted runway condition codes associated with the plurality of sections of the particular runway, a plurality of required landing parameters for each section of the plurality of sections of the runway. In such examples, the plurality of required landing parameters may be associated with executing a landing procedure for the vehicle 112 via the runway, and the plurality of required landing parameters may comprise a required landing distance associated with each section of the plurality of sections of the runway. The RALS system 308 may be configured to determine, based on the plurality of required landing parameters, that a required runway length associated with the landing procedure does not satisfy an available runway length (e.g., a landing usable runway length) associated with the runway.

In such a scenario, the RALS system 308 may be configured to generate one or more alerts, warnings, notifications, and/or prompts related to the lack of available runway length for the vehicle 112. The RALS system 308 may cause rendering of the one or more alerts, warnings, notifications, and/or prompts via, for example, the onboard RALS system 302, the vehicle apparatus 200, and/or the RALS system apparatus 312. The one or more alerts, warnings, notifications, and/or prompts, in some contexts, detail the risk of the vehicle overrunning and/or veering off the runway. Additionally or alternatively, the one or more alerts, warnings, notifications, and/or prompts, in some contexts, detail the one or more way in which the vehicle operator may mitigate the risk of overrunning and/or veering off the runway.

For example, the one or more alerts, warnings, notifications, and/or prompts may advise the vehicle operator to lower the mass of the vehicle by staying in a holding pattern (e.g., a holding flight pattern) in order to burn a determined amount of fuel, thereby lowering the mass of the vehicle to account for the required landing parameters associated with each section of the plurality of sections of the runway. In various contexts, the RALS system 308 causes rendering of the one or more alerts, warnings, notifications, and/or prompts via remote vehicle operation interface associated with one or more electronic displays associated with the RALS system apparatus 312. Additionally or alternatively, the RALS system 308 in some contexts causes rendering of the one or more alerts, warnings, notifications, and/or prompts via the vehicle apparatus 200 and/or the electronic displays 304.

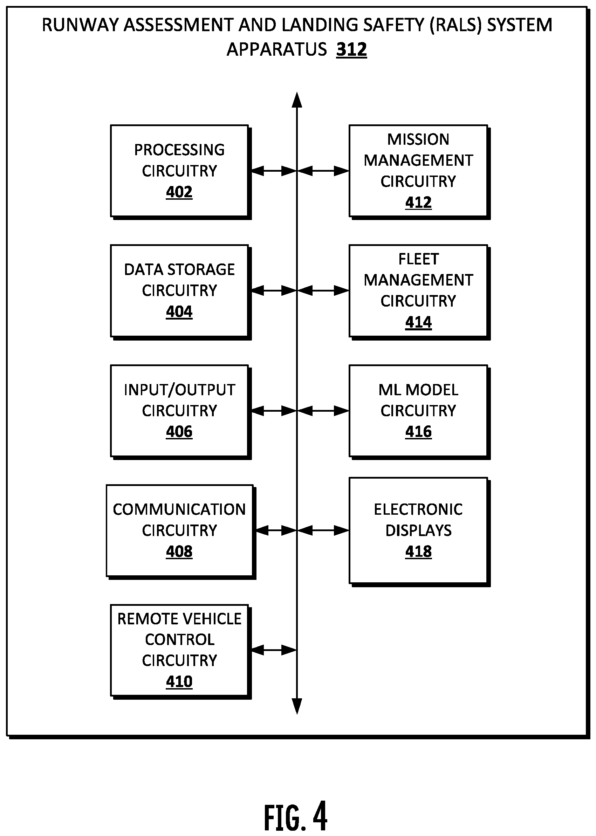

As shown in FIG. 3, in addition to the runway condition model 310, the RALS system 308 also comprises the RALS system apparatus 312 and the RALS datastore 314. The RALS system apparatus 312, in some contexts is a computing apparatus deployed in many configurations, the details of which will be provided in the description of FIG. 4 which illustrates the various components of the RALS system apparatus 312. The RALS system apparatus 312 is configured to generate one or more interactive user interfaces for rendering on one or more electronic displays associated with the RALS system 308. For example, in some embodiments, the RALS system apparatus 312 is configured to generate interactive user interfaces and/or dashboards comprising various interactive interface elements representing data related to the RALS platform 300, data related to one or more onboard RALS systems 302, data related to one or more vehicles 112, data related to the one or more systems integrated with the RALS system 308, and/or data related to the one or more storage systems associated with the RALS platform 300. In various examples, the RALS system apparatus 312 is configured to generate and/or cause generation of the interactive user interfaces and/or dashboards for an RALS system application instance associated with respective vehicle 112.

As such, the RALS system apparatus 312, via the one or more interactive user interfaces and/or dashboards, is configured to initialize, configure, update, modify, control and/or otherwise set up an onboard RALS system 302 associated with a particular vehicle 112. Additionally or alternatively, the RALS system apparatus 312, via the one or more interactive user interfaces and/or dashboards, is configured to initialize, configure, update, modify, and/or otherwise set up one or more components associated with the vehicle 112 such as, for example, the electronic displays 304 and/or the onboard datastore 306.

The RALS datastore 314 associated with the RALS system 308 in some contexts is configured to store, retrieve, configure, modify, and/or otherwise manage one or more portions of data related to the RALS platform 300. For instance, the RALS datastore 314, in some contexts, stores runway data, travel hub data, runway condition data, vehicle profile data, prior vehicle landing deceleration profile data, runway condition model data, and/or one or more portions of training data for training and/or re-training the runway condition model 310. Additionally, the RALS datastore 314 in some contexts stores one or more portions of data associated with the runway condition data sources 316, environment data systems 108 and/or the vehicle operation management systems 106. As such, the one or more portions of data comprised in the RALS datastore 314 may be used to train, re-train, and/or otherwise update the runway condition model 310. In this way, the runway condition model 310 may be iteratively trained such that the accuracy, efficiency, and/or performance of said ML models are increased over time.

Furthermore, the RALS datastore 314 is configured to store one or more portions of data related to one or more vehicles associated with a vehicle fleet related to the RALS platform 300. For example, the RALS datastore 314 in some contexts stores one or more vehicle profiles, vehicle identifiers, vehicle load identifiers, vehicle component identifiers, onboard RALS system identifiers, vehicle fleet data, vehicle mission data, and/or any other data pertinent to the one or more vehicles in a vehicle fleet associated with the RALS platform 300. Additionally, the RALS datastore 314 may store one or more portions of personnel data related to one or more vehicle operators, vehicle pilots, vehicle crew members, ground crew members, management personnel, and/or passengers associated with the RALS platform 300.

In various embodiments, the RALS datastore 314 may be configured as cloud-based storage systems. As such, the one or more portions of data comprised in the RALS datastore 314 may be accessed, retrieved, updated, and/or managed by the vehicle apparatus 200 via the network 110. Additionally or alternatively, in various embodiments, the one or more portions of data comprised in the RALS datastore 314 may be accessed, retrieved, updated, and/or managed by the RALS system apparatus 312 via the network 110. Additionally or alternatively, the one or more portions of data comprised in the RALS datastore 314 may, in various contexts, be stored locally in the vehicle apparatus 200 and/or the RALS system apparatus 312.

The runway condition data sources 316 comprise one or more data sources configured to transmit, broadcast, display, portray, convey, describe, aggregate, compile, process, and/or otherwise make available one or more portions of runway condition data associated with one or more runways associated with a travel hub. A runway condition data source 316 may be configured as one or more of one or more ground sensors associated with one or more respective runways, digital notices to airmen (NOTAMs), voice broadcasts, automated terminal information service (ATIS) messages, datalink messages, pilot reports (PIREPs), and/or prior vehicle landing deceleration profiles associated with one or more respective vehicles 112 that recently landed on a respective runway.

A prior vehicle landing deceleration profile may comprise data about a vehicle touch down point and/or stop point on a runway, as well as a speed of the vehicle 112 and/or the brake pressure applied at each section of a plurality of sections associated with a respective runway. In some embodiments, a prior vehicle landing deceleration profile may comprise data related to external wind speed and/or direction, as well as other relevant vehicle landing data such as vehicle power settings, vehicle type, the mass of the vehicle 112 at the time of landing, and/or one or more portions of a vehicle profile associated with the vehicle 112. In various embodiments, a prior vehicle landing deceleration profile may be generated by an onboard RALS system 302 associated with a vehicle 112 that has recently landed on a respective runway.

FIG. 4 illustrates an example RALS system apparatus 312 associated with the RALS system 308 in accordance with at least some example embodiments of the present disclosure. As depicted in FIG. 4, the RALS system apparatus 312 comprises processing circuitry 402, data storage circuitry 404, input/output circuitry 406, communication circuitry 408, remote vehicle control circuitry 410, mission management circuitry 412, fleet management circuitry 414, ML model circuitry 416, and/or one or more electronic displays 418. In some embodiments, other elements of the RALS system apparatus 312 provide or supplement the functionality of another particular set of circuitry. For example, the processing circuitry 402 in some embodiments provides processing functionality to any of the other sets of circuitry, the data storage circuitry 404 provides storage functionality to any of other the sets of circuitry, the communication circuitry 408 provides network interface functionality to any of the other sets of circuitry, and/or the like. Additionally or alternatively, in various embodiments, the RALS system apparatus 312 is configured to control, configure, and/or otherwise operate one or more of the circuitries 202-214 of the vehicle apparatus 200 illustrated in FIG. 2 via the network 110. Additionally or alternatively, the RALS system apparatus 312 is configured to control, configure, and/or otherwise operate the one or more vehicle onboard systems 102 associated with a vehicle (e.g., the vehicle 112), as well as the other connected vehicle systems 104.

In some embodiments, the processing circuitry 402 (and/or co-processor or any other processing circuitry assisting or otherwise associated with the processor) is/are in communication with the data storage circuitry 404 via a bus for passing information among components of the RALS system apparatus 312. In some embodiments, for example, the data storage circuitry 404 is non-transitory and includes for example, one or more volatile and/or non-volatile memories. In other words, for example, the data storage circuitry 404 in some embodiments includes or embodies an electronic storage device (e.g., a computer readable storage medium). In some embodiments, the data storage circuitry 404 is configured to store information, data, content, applications, instructions, or the like, for enabling the RALS system apparatus 312 to carry out various functions in accordance with example embodiments of the present disclosure. In various embodiments, the data storage circuitry 404 is configured to access, retrieve, store, delete, and/or otherwise manage one or more portions of data in the onboard datastore 306, the onboard datastore 306, and/or the RALS datastore 314.

In various embodiments, the processing circuitry 402 is embodied in a number of different ways. For example, in some example embodiments, the processing circuitry 402 includes one or more processing devices configured to perform independently. Additionally or alternatively, in some embodiments, the processing circuitry 402 includes one or more processors configured in tandem via a bus to enable independent execution of instructions, pipelining, and/or multithreading. The use of the terms "processor" and "processing circuitry" should be understood to include a single core processor, a multi-core processor, multiple processors internal to the RALS system apparatus 312, and/or one or more remote or "cloud" processors external to the RALS system apparatus 312.

In an example embodiment, the processing circuitry 402 is configured to execute instructions stored in the data storage circuitry 404 or otherwise accessible to the processing circuitry 402. Additionally or alternatively, the processing circuitry 402 in some embodiments is configured to execute hard-coded functionality. As such, whether configured by hardware or software methods, or by a combination thereof, the processing circuitry 402 represents an entity (e.g., physically embodied in circuitry) capable of performing operations according to an embodiment of the present disclosure while configured accordingly. Additionally or alternatively, as another example in some example embodiments, when the processing circuitry 402 is embodied as an executor of software instructions, the instructions specifically configure the processing circuitry 402 to perform the algorithms embodied in the specific operations described herein when such instructions are executed.

As one particular example embodiment, the processing circuitry 402 is configured to perform various operations associated with facilitating various runway condition assessment and vehicle landing safety operations for one or more vehicles 112. In some embodiments, the processing circuitry 402 includes hardware, software, firmware, and/or a combination thereof, that may be configured to receive, retrieve, aggregate, parse, and/or otherwise process runway data associated with one or more runways, where the runway data may comprise at least one of a runway identifier, a runway length, a runway threshold, a landing usable runway length, and/or a runway surface type associated with the one or more runways. Additionally or alternatively, in some embodiments, the processing circuitry 402 includes hardware, software, firmware, and/or a combination thereof, that may be configured to receive, retrieve, aggregate, parse, and/or otherwise process runway condition data associated with a runway surface condition associated with a plurality of sections of the one or more runways.

Additionally or alternatively, in some embodiments, the processing circuitry 402 includes hardware, software, firmware, and/or a combination thereof, that may be configured to determine, based on the runway section condition output data generated by the runway condition model, a runway condition code associated with the one or more sections of the respective runway. Additionally or alternatively, in some embodiments, the processing circuitry 402 includes hardware, software, firmware, and/or a combination thereof, that in real-time updates rendering of a user interface and/or interface elements thereof in response to updated data related to one or more runway condition codes and/or one or more adjusted runway condition codes. Additionally or alternatively, in some embodiments, the processing circuitry 402 includes hardware, software, firmware, and/or a combination thereof, that may be configured to automatically determine various required landing parameters for each section of the plurality of sections of the respective runway in order execute a safe landing procedure for a respective vehicle (e.g., a commercial airliner, private jet, and/or the like).

In some embodiments, RALS system apparatus 312 includes data storage circuitry 404 that is configured to store, update, retrieve, delete, and/or otherwise manage one or more portions of data associated with the onboard datastore 306 and/or onboard datastore 306 of the RALS platform 300, and/or the RALS datastore 314 associated with the RALS system 308. As described herein, the data storage circuitry 404, in some contexts, stores and/or retrieves one or more computer program instructions associated with the one or more operations described herein. In various embodiments, the data storage circuitry 404 embodies, or integrates with, a server system, a cloud storage system, a collection of databases, one or more datastores, and/or any other type of non-transitory storage medium. In certain embodiments, the data storage circuitry 404 stores one or more portions of data obtained from the runway condition data sources 316, the vehicle operation management systems 106 and/or the environment data systems 108. Additionally, in some embodiments, the data storage circuitry 404 is configured to store, update, retrieve, delete, and/or otherwise maintain any training data associated with a runway condition model 310.

In some embodiments, RALS system apparatus 312 includes input/output circuitry 406 that provides output to the user and, in some embodiments, to receive an indication of a user input (e.g., user input generated by a remote operator, ground crew member, and/or the like). In some embodiments, the input/output circuitry 406 is in communication with the processing circuitry 402 to provide such functionality. The input/output circuitry 406 comprises one or more user interfaces and in some embodiments includes an electronic display that comprises the interfaces rendered as a web user interface, an application user interface, a user device, a backend system, or the like. In some embodiments, the input/output circuitry 406 also includes a keyboard, a mouse, a joystick, a touch screen, touch areas, soft keys a microphone, a speaker, or other input/output mechanisms.

The processing circuitry 402, and/or input/output circuitry 406 comprising a processor, in some embodiments is configured to control one or more functions of one or more interface elements through computer program instructions (e.g., software and/or firmware) stored on a memory accessible to the processing circuitry 402 (e.g., data storage circuitry 404, and/or the like). In some embodiments, the input/output circuitry 406 includes or utilizes a user-facing application to provide input/output functionality to a computing device and/or other display associated with a user. In some embodiments, the input/output circuitry 406 includes a primary flight display and/or a multi-function display associated with a vehicle (e.g., a vehicle 112). Additionally or alternatively, in some embodiments, the input/output circuitry 406 includes one or more software-rendered user interfaces including interface elements that depict particular data and/or information, and/or that receive user input. Additionally or alternatively, in some embodiments, the input/output circuitry 406 embodies, integrates with, and/or is otherwise associated with one or more electronic displays 418.

The communication circuitry 408 includes any means such as a device or circuitry embodied in either hardware or a combination of hardware and software that is configured to receive and/or transmit data from/to a communications network and/or any other computing device, circuitry, or module in communication with the RALS system apparatus 312. In this regard, the communication circuitry 408 includes, for example in some embodiments, a network interface for enabling communications with a wired or wireless communications network. Additionally or alternatively in some embodiments, the communication circuitry 408 includes one or more network interface cards, antennas, buses, switches, routers, modems, and supporting hardware, firmware, and/or software, or any other device suitable for enabling communications via one or more communications networks (e.g., the network 110). Additionally or alternatively, the communication circuitry 408 includes circuitry for interacting with the antennas and/or other hardware or software to cause transmission of signals via the antennas or to handle receipt of signals received via the antennas. In some embodiments, the communication circuitry 408 enables transmission to and/or receipt of data from one or more computing devices and/or systems of other connected vehicle systems 104, vehicle operation management systems 106, and/or environment data systems 108, in communication with the RALS system apparatus 312.

The remote vehicle control circuitry 410 includes hardware, software, firmware, and/or a combination thereof, that supports functionality associated with navigating and/or controlling a vehicle 112 remotely from the RALS system 308. In some embodiments, remote vehicle control circuitry 410 controls and/or configures one or more of the vehicle onboard systems 102 associated with the vehicle. In some embodiments, remote vehicle control circuitry 410 includes hardware, software, firmware, and/or a combination thereof, that receives trip plan data (e.g., embodying a flight plan), location services data representing a location of the vehicle, and/or the like. Additionally or alternatively, in some embodiments, the remote vehicle control circuitry 410 includes hardware, software, firmware, and/or a combination thereof, that depicts interface elements representing at least a flight path or indication where the vehicle is currently travelling and/or should travel.

Additionally or alternatively, in some embodiments, the remote vehicle control circuitry 410 includes hardware, software, firmware, and/or a combination thereof, that autonomously controls one or more components of a vehicle 112. In some such embodiments, the remote vehicle control circuitry 410 autonomously controls one or more physical components of the vehicle to facilitate movement of the vehicle along a particular path. Additionally or alternatively, in some embodiments, the remote vehicle control circuitry 410 includes hardware, software, firmware, and/or a combination thereof, that semi-autonomously controls one or more components of a vehicle 112, for example where certain aspects of the operation of the vehicle are autonomously performed and others (e.g., directional control) is/are controlled by a user (e.g., a remote operator). Additionally or alternatively, in some embodiments, the remote vehicle control circuitry 410 includes hardware, software, firmware, and/or a combination thereof, that receives remote operator input for controlling one or more components of a vehicle, for example via vehicle flight controls to alter speed and/or direction of the vehicle. It will be appreciated that, in some embodiments, the remote vehicle control circuitry 410 includes a separate processor, specially configured field programmable gate array (FPGA), or a specially programmed application specific integrated circuit (ASIC).

The mission management circuitry 412 includes hardware, software, firmware, and/or a combination thereof, that supports functionality associated with generating, receiving, configuring, and/or otherwise managing data related to the mission of one or more vehicles associated with the RALS platform 300. For example, the mission management circuitry 412 is configured to generate and/or manage one or more vehicle operation constraints associated with the operation of a vehicle. Vehicle operation constraints include, but are not limited to, constraints related to the configuration of one or more vehicle systems associated with the vehicle, constraints related to a trip plan (e.g., destinations, waypoints, flight paths, arrival/departure schedules and/or procedures, traffic management constraints, trip parameters, and/or the like), power consumption constraints (e.g., battery and/or fuel consumption thresholds), specific vehicle constraints (e.g., performance capabilities associated with one or more vehicle systems of the vehicle 112), environmental constraints (e.g., regulations related to operating a vehicle 112 in an urban environment), and/or the like. In various embodiments, the one or more vehicle operation constraints in some contexts are rendered via a respective electronic interface associated with the vehicle apparatus 200 and/or the RALS system apparatus 312.

Additionally, the mission management circuitry 412 includes hardware, software, firmware, and/or a combination thereof, that supports functionality associated with handling one or more logistical aspects of the one or more vehicles (e.g., the one or more vehicles 112) associated with the RALS platform 300. Non-limiting examples include monitoring the logistical aspects of one or more destinations (e.g., one or more travel hubs, airports, vertiports, etc.) associated with a trip plan of a vehicle (e.g., a vehicle 112). For example, the mission management circuitry 412 in some contexts monitors occupancy (e.g., available facilities to accommodate a vehicle 112) associated with a destination. Additionally or alternatively, the mission management circuitry 412 in some contexts determines logistical aspects related to potential destinations such as nearby health and safety services.

The fleet management circuitry 414 includes hardware, software, firmware, and/or a combination thereof, that supports functionality associated with the management of a fleet of vehicles (e.g., vehicles 112) associated with an enterprise related to the RALS platform 300. In various embodiments, the fleet management circuitry 414 includes hardware, software, firmware, and/or a combination thereof, that monitors the location, operational status, health, performance, and/or capabilities of one or more vehicles associated with the RALS platform 300. In this regard, the fleet management circuitry 414 generates one or more portions of fleet management data configured as model input for the runway condition model 310.

The ML model circuitry 416 includes hardware, software, firmware, and/or a combination thereof, that supports functionality associated with the runway condition model 310. For example, the ML model circuitry 416 executes, at least in part, one or more portions of program code associated with the methods and operations of the runway condition model 310. For example, the ML model circuitry 416 includes hardware, software, firmware, and/or a combination thereof, that receives and/or analyzes one or more portions of model input comprising runway data, runway condition data, ground sensor data, vehicle profile data, prior vehicle landing deceleration profiles, RCAM broadcast data, vehicle performance data, vehicle sensor data, vehicle operation data, vehicle system data, air traffic data, environmental data, logistical data, personnel data, and/or any other relevant data related to a particular runway, travel hub, and/or vehicle 112.

Additionally, in various embodiments, the ML model circuitry 416 includes hardware, software, firmware, and/or a combination thereof, that in some contexts is employed to train and/or retrain the runway condition model 310 based at least in part on one or more portions of vehicle landing data (e.g., data associated with one or more prior vehicle landing deceleration profiles) related to one or more vehicles associated with one or more respective enterprises related to the RALS platform. Additionally or alternatively, the runway condition model, in some contexts, is also trained and/or retrained based in part on one or more portions of vehicle operator input data (e.g., input data received via a user interface associated with an application instance related to the RALS system), ground operator input data generated by ground operators associated with one or more respective runways, and/or any of the model input data described above. In various embodiments, the ML model circuitry 416 is configured to facilitate the training and/or retraining of the runway condition model 310 based in part on a predefined schedule such as, for example, daily, weekly, bi-weekly, monthly, and/or the like. In this regard, the ML model circuitry 416 includes hardware, software, firmware, and/or a combination thereof, that causes the storage, updating, retrieval, and/or the deletion of one or more portions of data associated with the runway condition model 310.

The electronic displays 418 associated with the RALS system apparatus 312 may comprise, in various contexts, one or more displays associated with a cockpit of a vehicle (e.g., a vehicle 112), one or more vertical situation displays (VSDs), one or more PFDs, one or more displays associated with an FMS, one or more displays associated with a navigation system, one or more displays associated with one or more respective LRUs, one or more computer displays, and/or the like. The electronic displays 418 are configured to display one or more portions of data related to one or more of runway data, runway condition data, ground sensor data, vehicle profile data, prior vehicle landing deceleration profiles, RCAM broadcast data, vehicle performance data, vehicle sensor data, vehicle operation data, vehicle system data, air traffic data, environmental data, logistical data, personnel data, and/or any other relevant data related to a particular runway, travel hub, and/or vehicle 112. In various contexts, the one or more electronic displays 418 may be associated with one or more computing devices and/or data storage systems associated with the RALS system 308.

It will be appreciated that, further in some embodiments, two or more of the sets of circuitries 402-418 are combinable. Additionally or alternatively, in some embodiments, one or more of the sets of circuitry 402-418 perform some or all of the functionality described associated with another component. For example, in some embodiments, one or more of the sets of circuitry 402-418 are combined into a single component embodied in hardware, software, firmware, and/or a combination thereof. For example, in some embodiments, two or more of the remote vehicle control circuitry 410 and ML model circuitry 416 are embodied by a single set of circuitry that performs the combined operations of the individual sets of circuitry. Similarly, in some embodiments, one or more of the sets of circuitry, for example remote vehicle control circuitry 410 and/or ML model circuitry 416 is/are combined with the processing circuitry 402, such that the processing circuitry 402 performs one or more of the operations described above with respect to each of these other sets of circuitry.

### OPERATIONAL EXAMPLES OF VARIOUS EMBODIMENTS OF THE DISCLOSURE

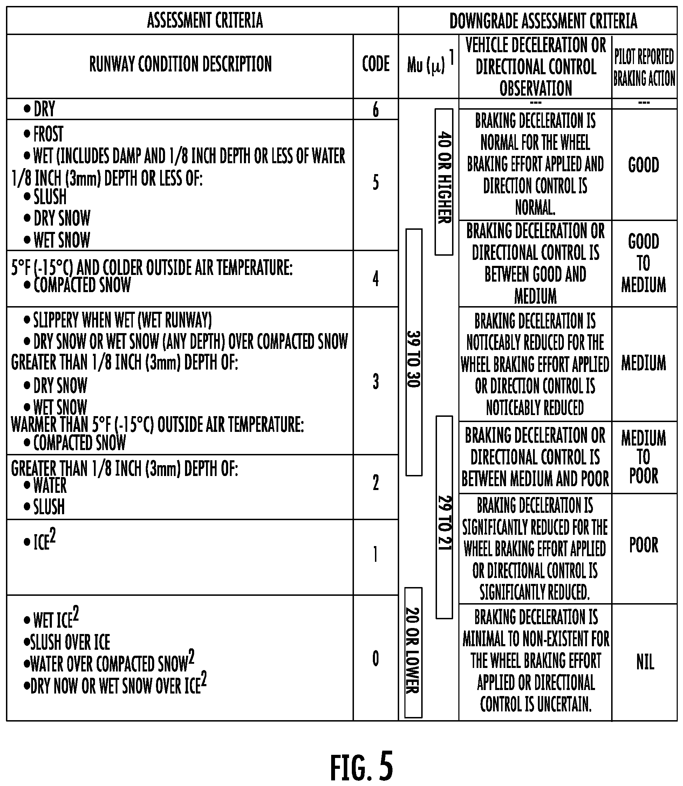

FIG. 5 illustrates an example of a runway condition assessment matrix (RCAM) in accordance with at least some example embodiments of the present disclosure. The RCAM is a data matrix curated by the international civil aviation organization (ICAO) that defines various runway condition codes numerated from zero (0) to six (6) that may be used to describe various surface conditions and/or surface contaminants for a runway. For example, according the RCAM, a runway condition code 6 describes dry runway surface conditions, and a runway condition code 0 describes wet ice, slush over ice, water on top of compacted snow, and/or dry snow or wet snow on top of ice. The runway condition codes defined by the RCAM may also indicate a depth of the surface contaminant associated with the runway condition. For example, a runway condition code 2 may indicate that there is more than a 3mm depth of water and/or slush on a respective runway surface.

In various embodiments a particular runway condition code defined by the RCAM may be associated with a particular section of a plurality of sections of a respective runway. For example, if a particular section of a runway is associated with a runway condition code of 4, it may be understood that the surfaces conditions of the particular section of runway is associated with -15°C (5°F) and colder outside air temperatures and/or compacted snow on the particular section of runway. As another example, if a particular section of a runway is associated with a runway condition code of 3, it may be understood that the surfaces conditions of the particular section of runway is associated with slippery wet conditions, dry snow or wet snow on top of compacted snow, more than 3mm of wet or dry snow, or higher than -15°C (5°F) outside air temperatures with compacted snow on the particular section of the runway. As shown in FIG. 5, the RCAM also defines various downgrade assessment criteria associated with various amount of braking input associated with a vehicle (e.g., a commercial airliner, private jet, and/or the like), a vehicle deceleration or directional control observation, and/or a pilot reported braking action.

FIG(s). 6A-6C illustrate examples of notices to airmen (NOTAMs) comprising runway condition data in accordance with at least some example embodiments of the present disclosure. In various embodiments, one or more NOTAMs and/or similar messages (e.g., automatic terminal information service (ATIS) messages, datalink messages, PIREPS, etc.) may be received, retrieved, and/or otherwise processed by an RALS system 308 in order to aggregate, compile, and/or otherwise process runway condition data associated with a particular runway.

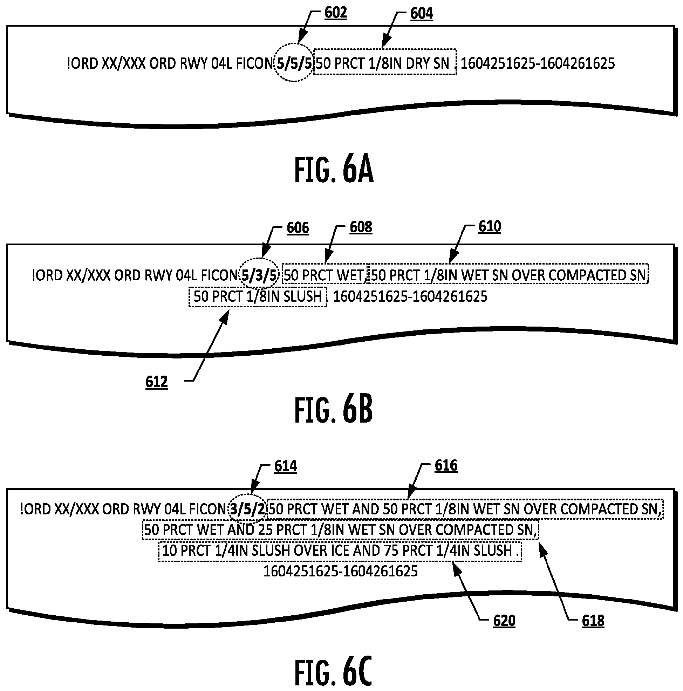

FIG. 6A illustrates a NOTAM that describes a uniform runway surface coverage for a particular runway that has been divided into three sections (e.g., touchdown, midpoint, and rollout sections respectively). The NOTAM in FIG. 6A describes that the majority of the runway is covered in a similar fashion in each third. This is described in part by runway condition code group 602 and the corresponding runway condition code description 604 that describes the runway condition code for each respective section of the runway. In the example shown in FIG. 6A, the runway condition code group 602 is listed as "5/5/5," and indicates that each of the three sections of the runway (e.g., each of the respective touchdown, midpoint, and rollout sections) has a surface condition associated with an RCAM runway condition code of 5. In some contexts, the runway condition data listed in the NOTAM may direct a vehicle operator reevaluate the performance of the vehicle and/or reevaluate the need for any adjustments to be made (e.g., adjustments to be to the weight and balance of the vehicle, the configuration of one or more vehicle systems, the runway length needed to safely land, and/or the like).

FIG. 6B illustrates a NOTAM that describes a runway having a different contaminant(s) in each section of the runway (e.g., in each of the touchdown, midpoint, and rollout sections). This is described in part by runway condition code group 606 and the corresponding runway condition code descriptions 608, 610, and 612 that describe the runway condition code for each respective section of the runway. In the example shown in FIG. 6B, the runway condition code group 606 is listed as "5/3/5," and indicates that the touchdown and rollout sections have a surface condition associated with an RCAM runway condition code of 5, and that the midpoint section has a surface condition associated with an RCAM runway condition code of 3. It may be understood by the corresponding runway condition code description 608 that the surface of the touchdown section is 50% wet, by the corresponding runway condition code description 610 that the surface of the midpoint section is 50% 1/8 inch wet snow over compacted snow, and by the corresponding runway condition code description 612 that the surface of the rollout section is 50% 1/8 inch slush.

FIG. 6C illustrates a NOTAM that describes a runway having a different contaminant(s) in each section of the runway (e.g., in each of the touchdown, midpoint, and rollout sections). This is described in part by runway condition code group 614 and the corresponding runway condition code descriptions 616, 618, and 620 that describe the runway condition code for each respective section of the runway. In the example shown in FIG. 6C, the runway condition code group 614 is listed as "3/5/2," and indicates that the touchdown section has a surface condition associated with an RCAM runway condition code of 3, the midpoint section has a surface condition associated with an RCAM runway condition code of 5, and the rollout section has a surface condition associated with an RCAM runway condition code of 2. It may be understood by the corresponding runway condition code descriptions 616-620 that each of the respective runway sections has different depths and types of surface contaminants.

As will be appreciated regarding the various example NOTAMs illustrated in FIG(s). 6A-6C, NOTAMs and various other types of broadcast messages comprising runway condition data may range from simple (e.g., the example NOTAM in FIG. 6A) to complex (e.g., the example NOTAM in FIG. 6C). To address this technical challenge, the runway condition model 310 associated with the RALS system 308 is configured to parse and/or process runway condition data comprised in various formats (e.g., NOTAMs) in order to determine an initial runway condition code for one or more respective sections of a plurality of sections of a particular runway. Although the example NOTAMs depicted in FIG(s). 6A-6C comprise runway condition data for runways that have been divided into three sections (e.g., touchdown, midpoint, and rollout sections respectively), it will be appreciated that embodiments herein may be configured to apply the runway condition assessment and vehicle landing safety techniques described herein to runways that have been divided into two or more sections. For example, in order to facilitate the safe landing of large vehicles (e.g., large cargo aircraft, intercontinental aircrafts, etc.), a particular runway may be divided into ten sections.

FIG(s). 7 - 9 illustrate various operational examples of user interfaces configured to facilitate the execution of one or more of the techniques described herein. The various user interfaces comprise a plurality of interface elements configured to interact with the various hardware and/or software components associated with the RALS platform 300. For example, an interface element may be any interactive element associated with a user interface configured to control, update, initiate, direct, manage, and/or otherwise cause operation of one or more computing devices to execute one or more of the techniques described herein. A user interface associated with a RALS system application instance may comprise various interface elements configured to execute various operations associated with a RALS system and/or or any relevant components associated with a RALS platform. Interface elements may be configured as hard-keyed and/or soft-keyed interactive elements associated with a user interface and/or a computing device associated with a RALS platform. Examples of interface elements include, but are not limited to, interactive buttons, sliders, hyperlinks, text fields, radio buttons, drop-down menus, interactive lists, touchscreen elements, radial switches, linear switches, and/or the like that are configured to cause execution of one or more portions of computer program code associated with the one or more techniques described herein.

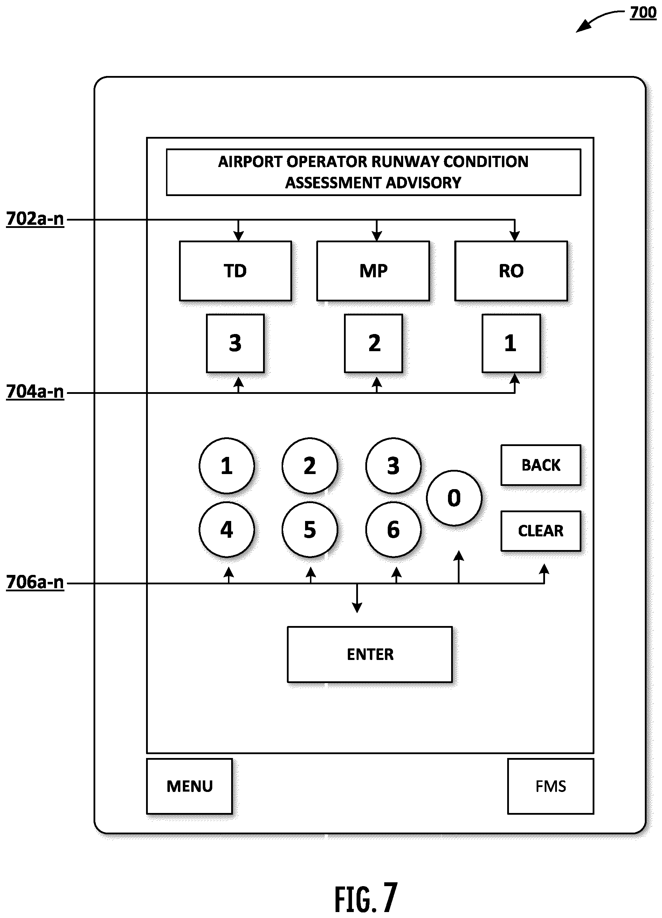

FIG. 7 illustrates an operational example of a user interface 700 associated with an RALS system application instance in accordance with at least some example embodiments of the present disclosure. In various examples, a RALS system application instance may be configured to initiate and/or cause execution of one or more of the operations associated with the RALS system 308. The RALS system application instance may be a software application configured to be embodied by, integrated with, and/or otherwise associated with one or more computing devices and/or systems associated with the RALS platform 300 (e.g., the onboard RALS system 302, vehicle apparatus 200, RALS system apparatus 312) and displayed via one or more electronic displays (e.g., electronic displays 304).

As shown in FIG. 7, the user interface 700 associated with an RALS system application may comprise a plurality of interface elements 702a-n - 706a-n related to an airport operator runway condition assessment advisory. In this particular example, the plurality of interface elements 702a-n - 706a-n are configured to display and/or facilitate the updating of one or more runway conditions codes associated with a particular runway for which a vehicle 112 associated with the user interface 700 is scheduled to land upon. As described herein, the various components of the RALS system 308 (e.g., the runway condition model 310) and/or the onboard RALS system 302 may be configured to automatically and dynamically update a user interface (e.g., user interface 700) and/or an RALS application instance based on one or more adjusted runway condition codes generated by a runway condition model 310.

For example, as shown on the user interface 700, one or more interface elements 702a-n may be configured to describe and/or cause selection of representations of the various respective sections of a particular runway. As illustrated by the example user interface 700, the interface elements 702a-n may be associated with a touchdown (e.g., "TD") section, midpoint (e.g., "MP"), and/or rollout (e.g., "RO") section of a particular runway. The corresponding interface elements 704a-n may be configured to automatically display an adjusted runway condition code generated by the runway condition model 310 for each of the respective sections of the runway associated with the interface elements 702a-n.

The user interface 700 further comprises interface elements 706a-n associated with a keypad configured to update the adjusted runway condition codes populated in the interface elements 704a-n. In various contexts, an operator of the vehicle 112 associated with the user interface 700 may determine that a particular, automatically-provisioned adjusted runway condition code associated with a respective section of the runway needs to be updated in order to better compute the required landing parameters associated with the respective section of the runway. For example, an interface element 702a associated with the touchdown section of the runway may be selected thereby activating the interface elements 706a-n and allowing a vehicle operator to input a desire runway condition code (e.g., a value from 0 to 6) in order to replace an adjusted runway condition code that was automatically provisioned by the onboard RALS system 302 (e.g., in conjunction with the RALS system 308).

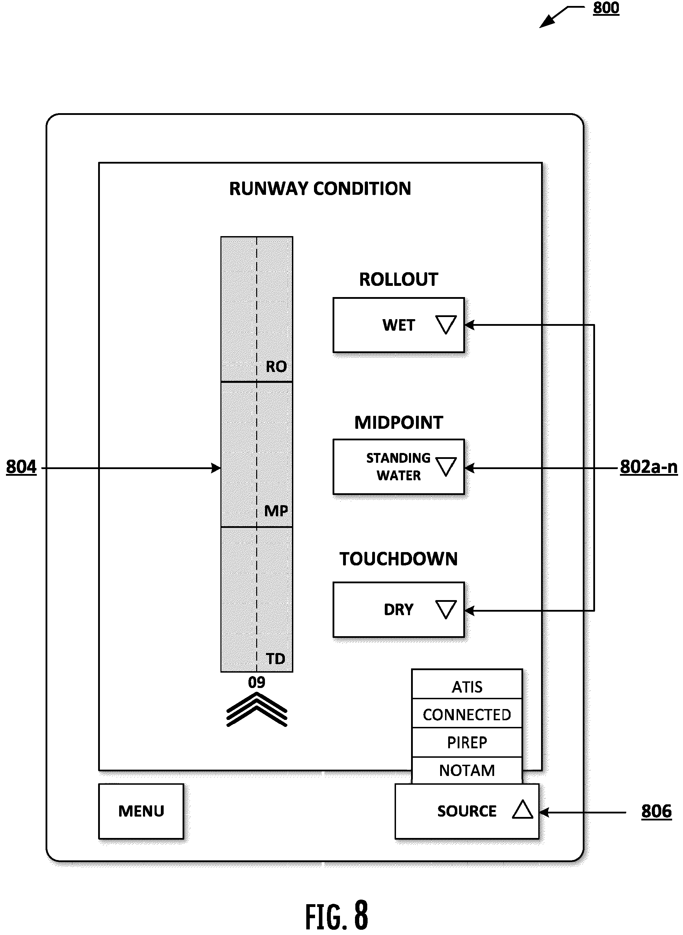

In various embodiments, selecting a respective interface element 706a configured as an "enter" button may cause the onboard RALS system 302 to compute required landing parameters for each respective section of the runway based on the values associated with the runway condition codes displayed by interface elements 704a-n. Additionally or alternatively, selecting the respective interface element 706a configured as the "enter" button may cause the onboard RALS system 302 to cause display of another user interface configured to add and/or update the runway condition data associated with one or more respective sections of the runway. For example, referencing FIG. 8, in some embodiments, selection of the respective interface element 706a configured as the "enter" button may cause display of the user interface 800.

FIG. 8 illustrates an operational example of the user interface 800 associated with RALS system application instance in accordance with at least some example embodiments of the present disclosure. In various embodiments, the user interface 800 may comprise a plurality of interface elements 802a-n configured to add, replace, update, edit, remove, and/or otherwise manage various portions of runway condition data associated with a respective section of a runway. In various embodiments, one or more of the interface elements 802a-n may be automatically pre-selected, pre-engaged, and/or otherwise initiated by the onboard RALS system 302 in conjunction with the RALS system 308 based on automatically-provisioned adjusted runway condition codes generated by the runway condition model 310. For example, the one or more of the interface elements 802a-n may be automatically pre-selected, pre-engaged, and/or otherwise initiated based on the values associated with the runway condition codes displayed via the respective interface elements 704a-n associated with the runway sections corresponding to the respective interface elements 702a-n.

In various embodiments, the interface elements 802a-n may be associated with a respective section of a particular runway represented on the user interface 800. For example, the interface element 804 is an interactive representation of a respective runway for which a vehicle may be approaching. The interface element 804 may be divided into two or more sections associated with respective sections of the runway. For example, as depicted, the interface element 804 is configured to display three respective sections of a runway associated with a touchdown section (e.g., labeled as "TD"), a midpoint section (e.g., labeled as "MP"), and a rollout section (e.g., labeled as "RO"). The interface element 804 may also be configured to display additional portions of runway data associated with the respective runway such as, for example, a runway identifier (e.g., "09" as illustrated on the user interface 800), a runway length, a runway threshold, a landing usable runway length, and/or a runway surface type.

Additionally, the user interface 800 may comprise an interface element 806 configured as a button and/or dropdown menu associated with one or more runway condition data sources 316 (e.g., NOTAMs, ATIS messages, PIREPs, ground sensor data, and/or the like). In various embodiments, one or more portions of runway condition data associated with one or more respective sections of a runway may be automatically provisioned into the interface elements 802a-n for use in one or more calculations (e.g., required landing parameter calculations) based on a selection of a particular runway condition data source 316 via the interface element 806. For example, in various scenarios one or more runway condition data sources 316 may comprise differing runway condition data associated with the respective sections of a particular runway. As such, in various embodiments, the interface element 806 may be employed in order to give preference to a particular runway condition data source 316. In this regard, embodiments of the present disclosure provide the technical benefit of allowing an efficient, real-time comparison of runway condition data provided by a plurality of runway condition data sources 316. Furthermore, embodiments enable vehicle operators to use preferred runway condition data sources 316 when calculating various required landing parameters for particular sections of a respective runway.

As described herein, a runway condition code (e.g., as defined by the RCAM detailed in FIG. 5) may be associated with two or more runway surface contaminants and/or a corresponding depth of the two or more runway contaminants. Embodiments of the present disclosure accommodate the technically complex and variable definitions of the runway condition codes defined by the RCAM by allowing a vehicle operator to add, replace, update, edit, remove, and/or otherwise manage various portions of runway condition data associated with a respective section of a runway. In this manner, the RALS system 308 may be configured to compute the required landing parameters associated with the respective sections of a particular runway more accurately. As such, the RALS system 308 may be configured to improve upon various existing landing safety systems by computing a required runway length for a particular vehicle 112 based on the required landing parameters associated with the respective sections of the runway.

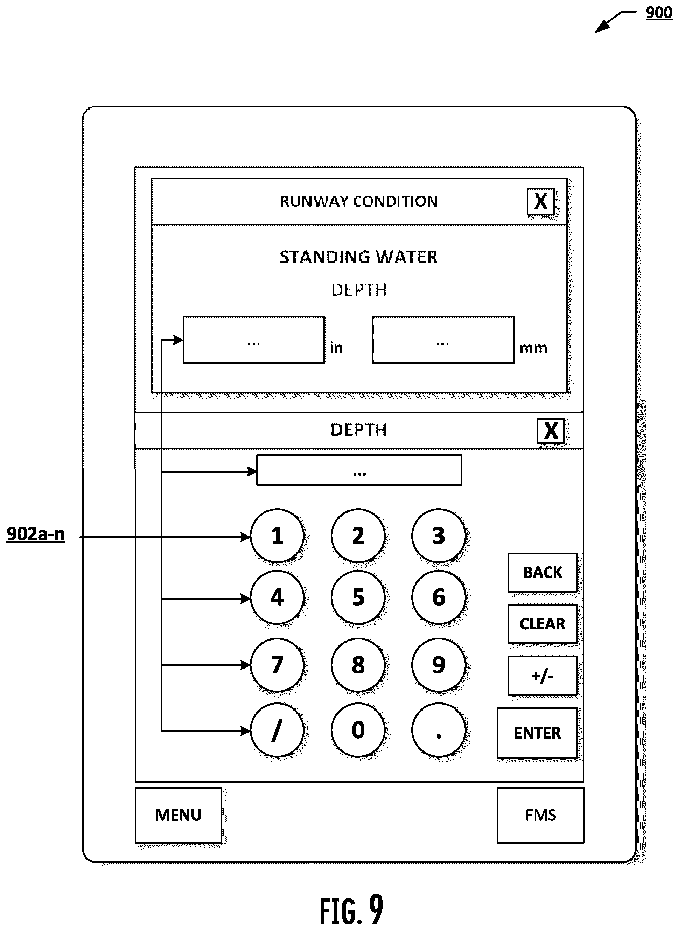

In this regard, as shown in FIG. 8, one or more of the interface elements 802a-n associated with various runway surface conditions related to the runway condition codes displayed via a respective interface elements 704a-n may be selectable and/or cause the display of various other user interfaces. For example, referencing FIG. 9, selection of a respective interface element 802a configured as a button and/or a dropdown menu associated with the runway surface condition "standing water" may cause display of the user interface 900.

FIG. 9 illustrates an operational example 900 of a user interface associated with RALS system application instance in accordance with at least some example embodiments of the present disclosure. In various embodiments, the user interface 900 may comprise a plurality of interface elements 902a-n configured to add, replace, update, edit, remove, and/or otherwise manage various portions of runway condition data associated with a respective section of a runway. For example, as shown by the user interface 900, various interface elements 902a-n may be configured to add, replace, update, edit, and/or otherwise indicate a specific depth of standing water associated with a respective section of the runway. As will be appreciated, the depth of standing water (or any other type of contaminant) on a particular section of a runway may greatly change the required landing parameters for the particular section of the runway. As such, the RALS system 308 is configured to account for various details (e.g., water depth, snow compactness, slush depth, etc.) related to the surface contaminants associated with the respective sections of the runway when determining the required landing parameters for the respective sections of the runway. In this manner, the RALS platform 300 improves upon existing landing safety systems by being configured to account for minute details related to the surface contaminants of each respective section of a particular runway. As such, the RALS platform 300 provides enhanced runway condition assessment and vehicle landing safety for any vehicles 112 associated with the RALS platform 300.

### EXAMPLE PROCESSES OF THE DISCLOSURE

Having described example systems, apparatuses, data flows, user interfaces, and user interface elements in accordance with the present disclosure, example processes of the disclosure will now be discussed. It will be appreciated that each of the flowcharts depicts an example computer-implemented process that is performable by various means, including one or more of the apparatuses, systems, devices, and/or computer program products described herein, for example utilizing one or more of the specially configured components thereof.

It will be understood that each block of the processes, and combinations of blocks in the flowcharts, may be implemented by various means including hardware and/or a computer program product comprising one or more computer-readable mediums having computer-readable program instructions stored thereon. For example, one or more of the processes described herein in some embodiments is/are embodied by computer program of a computer program product. In this regard, the computer program products that embody the processes described herein in some embodiments comprise one or more non-transitory memory devices of a computing device, apparatus, and/or the like (for example, the memory 204 of the vehicle apparatus 200) storing instructions executable by a processor of a computing device (for example, by the processor 202 of the vehicle apparatus 200). In some embodiments, the computer program instructions of the computer program product that embody the processes are stored by non-transitory computer-readable storage mediums of a plurality of computing devices. It will be appreciated that any such computer program products may be loaded onto one or more computers and/or other programmable apparatuses (for example, a vehicle apparatus 200), such that the computer program product including the program code instructions that execute on the computers or other programmable apparatuses create means for implementing the functions specified in the operational blocks.

Further, in some embodiments, the computer program product includes one or more non-transitory computer-readable memories on which the computer program instructions are stored such that the one or more computer-readable memories may direct one or more computers and/or other programmable apparatuses to function in a particular manner, such that the computer program product comprises an article of manufacture that implements the functions specified in the operational blocks. Additionally or alternatively, in some embodiments, the computer program instructions of one or more computer program products are loaded onto computing devices or other programmable apparatuses to cause a series of operations to be performed on the computing devices or other programmable apparatuses a computer-implemented process such that the instructions that execute on the computing devices or other programmable apparatuses implement the functions specified in the operational blocks.

Each of the processes depicted includes a plurality of operational blocks defining a particular algorithm for performing one or more portions of functionality for generating and/or outputting improved user interfaces as described herein. The blocks indicate operations of each process. Such operations may be performed in any of a number of ways, including, without limitation, in the order and manner as depicted and described herein. In some embodiments, one or more blocks of any of the processes described herein occur in-between one or more blocks of another process, before one or more blocks of another process, in parallel with one or more blocks of another process, and/or as a sub-process of a second process. Additionally or alternatively, any of the processes in various embodiments include some or all operational steps described and/or depicted, including one or more optional blocks in some embodiments. With regard to the flowcharts illustrated herein, one or more of the depicted blocks in some embodiments is/are optional in some, or all, embodiments of the disclosure. Optional blocks are depicted with broken (or "dashed") lines. Similarly, it should be appreciated that one or more of the operations of each flowchart may be combinable, replaceable, and/or otherwise altered as described herein.

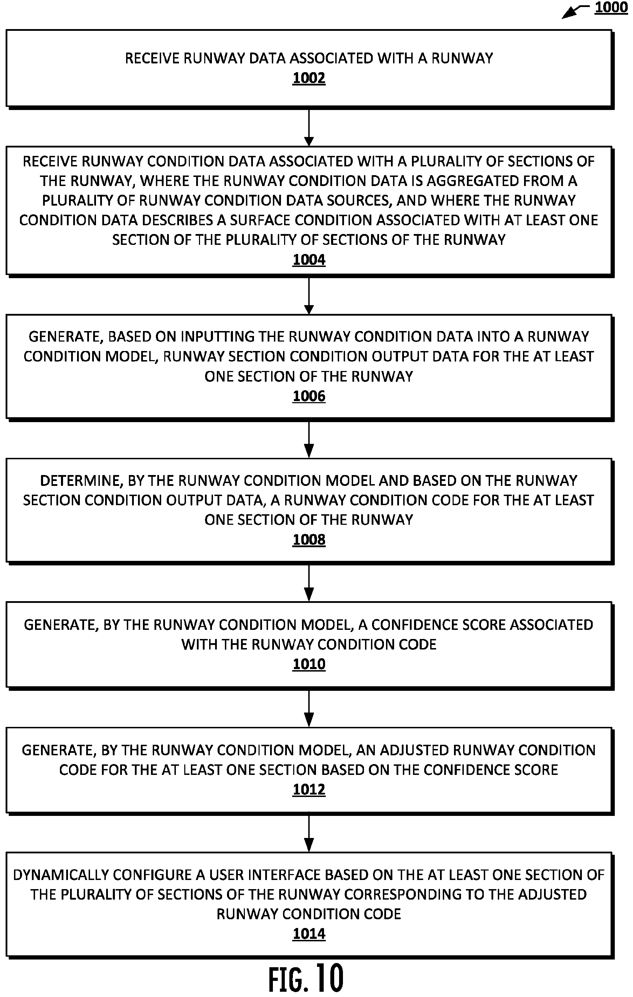

FIG. 10 illustrates a flowchart depicting example operations of an example process for providing enhanced runway condition assessment and vehicle landing safety for one or more vehicles in accordance with at least some example embodiments of the present disclosure. In some embodiments, the process 1000 is embodied by a computer-implemented process executable by any of a myriad of computing devices, apparatuses, systems, and/or the like as described herein. Additionally or alternatively, in some embodiments, the process 1000 is embodied by computer program code stored on a non-transitory computer-readable storage medium of a computer program product configured for execution to perform the process as depicted and described.

Additionally or alternatively, in some embodiments, the process 1000 is performed by one or more specially configured computing devices, such as the RALS system apparatus 312 alone or in communication with one or more other components, devices, systems, and/or the like (e.g., such as the vehicle apparatus 200). In this regard, in some such embodiments, the RALS system apparatus 312 is specially configured by computer-coded instructions (e.g., computer program instructions) stored thereon, for example in the data storage circuitry 404 and/or another component depicted and/or described herein and/or otherwise accessible to the RALS system apparatus 312, for performing the operations as depicted and described.

In some embodiments, the RALS system apparatus 312 is in communication with one or more external apparatuses, systems, devices, and/or the like, to perform one or more of the operations as depicted and described. For example, the RALS system apparatus 312 in some embodiments is in communication with an end-user computing device, one or more external systems, and/or the like. It will be appreciated that while the process 1000 is described as performed by and from the perspective of the RALS system apparatus 312 for purposes of simplifying the description, the process 1000 may also be performed, in total or in part, by the vehicle apparatus 200 in conjunction with the onboard RALS system 302.

The process 1000 begins at operation 1002. At operation 1002, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that receives runway data associated with a runway.

At operation 1004, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that receives runway condition data associated with a plurality of sections of the runway, where the runway condition data is aggregated from a plurality of runway condition data sources 316, and where the runway condition data describes a surface condition associated with at least one section of the plurality of sections of the runway.

At operation 1006, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that generates, based on inputting the runway condition data into a runway condition model 310, runway section condition output data for the at least one section of the runway.

At operation 1008, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that determines, by the runway condition model 310 and based on the runway section condition output data, a runway condition code for the at least one section of the runway.

At operation 1000, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that generates, by the runway condition model 310, a confidence score associated with the runway condition code.

At operation 1002, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that generates, by the runway condition model 310, an adjusted runway condition code for the at least one section based on the confidence score

At operation 1004, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that dynamically configures a user interface associated with the computing device based on the at least one section of the plurality of sections of the runway corresponding to the adjusted runway condition code.

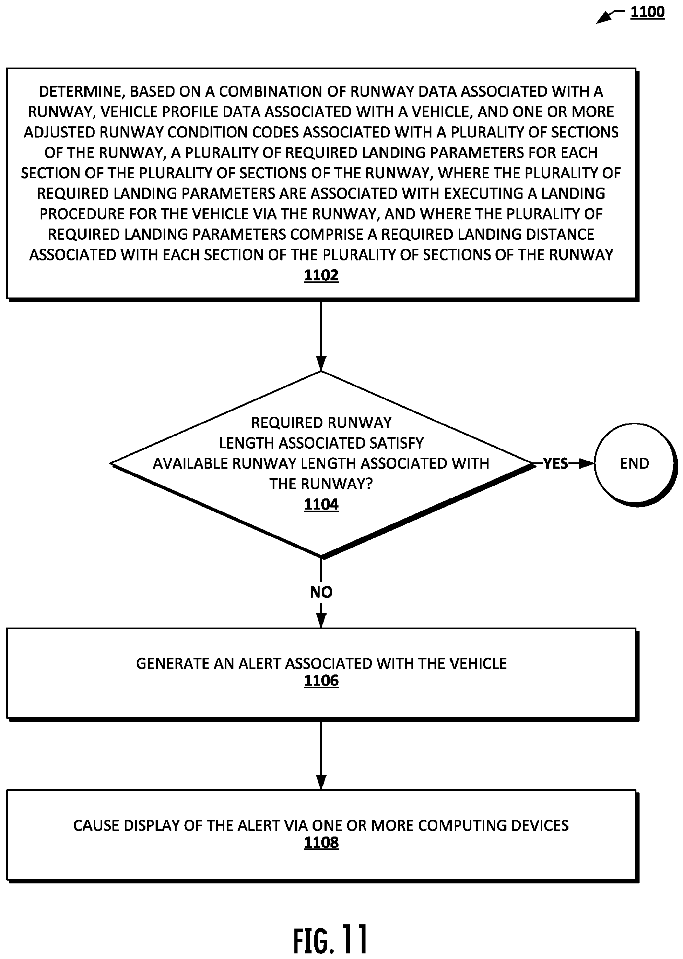

FIG. 11 illustrates a flowchart depicting example operations of an example process for determining a required runway length for a vehicle in accordance with at least some example embodiments of the present disclosure. In some embodiments, the process 1100 is embodied by a computer-implemented process executable by any of a myriad of computing devices, apparatuses, systems, and/or the like as described herein. Additionally or alternatively, in some embodiments, the process 1100 is embodied by computer program code stored on a non-transitory computer-readable storage medium of a computer program product configured for execution to perform the process as depicted and described.

Additionally or alternatively, in some embodiments, the process 1100 is performed by one or more specially configured computing devices, such as the RALS system apparatus 312 alone or in communication with one or more other components, devices, systems, and/or the like (e.g., such as the vehicle apparatus 200). In this regard, in some such embodiments, the RALS system apparatus 312 is specially configured by computer-coded instructions (e.g., computer program instructions) stored thereon, for example in the data storage circuitry 404 and/or another component depicted and/or described herein and/or otherwise accessible to the RALS system apparatus 312, for performing the operations as depicted and described.

In some embodiments, the RALS system apparatus 312 is in communication with one or more external apparatuses, systems, devices, and/or the like, to perform one or more of the operations as depicted and described. For example, the RALS system apparatus 312 in some embodiments is in communication with an end-user computing device, one or more external systems, and/or the like. It will be appreciated that while the process 1100 is described as performed by and from the perspective of the RALS system apparatus 312 for purposes of simplifying the description, the process 1100 may also be performed, in total or in part, by the vehicle apparatus 200 in conjunction with the onboard RALS system 302.

The process 1100 begins at operation 1102. At operation 1102, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that determines, based on a combination of runway data associated with a runway, vehicle profile data associated with a vehicle 112, and one or more adjusted runway condition codes associated with a plurality of sections of the runway, a plurality of required landing parameters for each section of the plurality of sections of the runway. In various embodiments, the plurality of required landing parameters are associated with executing a landing procedure for the vehicle 112 via the runway, and where the plurality of required landing parameters comprise a required landing distance associated with each section of the plurality of sections of the runway.

At operation 1104, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that determines, based on the plurality of required landing parameters, whether a required runway length associated with the landing procedure satisfies an available runway length associated with the runway. If it is determined that the required runway length is longer than the available runway length associated with the runway, the process 1100 proceeds to operation 1106. Alternatively, if it is determined that the required runway length is shorter than the available runway length associated with the runway, the process 1100 ends.

At operation 1106, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that generates an alert associated with the vehicle.

At operation 1108, the RALS system apparatus 312 includes means such as the processing circuitry 402, the data storage circuitry 404, the input/output circuitry 406, the communication circuitry 408, the remote vehicle control circuitry 410, the mission management circuitry 412, the fleet management circuitry 414, the ML model circuitry 416, and/or the like, or a combination thereof, that causes display of the alert via one or more computing devices.

### CONCLUSION

While several example contexts are described herein with respect to processing of data by an aerial vehicle, it will be appreciated in view of this disclosure that embodiments may include or otherwise be implemented as a part of other vehicles, devices, and/or the like. For example, in other contexts, embodiments of the present disclosure utilize sensors of and/or display data to displays of other types of vehicles, including ground vehicles. Additionally or alternatively, some embodiments utilize sensors of and/or display data to displays of other devices, including user devices, back-end computing devices, and/or the like. Indeed, in some embodiments, the sensors, computing devices, and/or displays are embodied and/or otherwise included in one or more computing devices not integrated as part of any vehicle (e.g., as a standalone computing device). In is intended that all such contexts, device types, and/or the like be included within the scope of this disclosure and covered within the scope of the claims appended herein.

Although an example processing system has been described above, implementations of the subject matter and the functional operations described herein may be implemented in other types of digital electronic circuitry, or in computer software, firmware, or hardware, including the structures disclosed in this specification and their structural equivalents, or in combinations of one or more of them.

Embodiments of the subject matter and the operations described herein may be implemented in digital electronic circuitry, or in computer software, firmware, or hardware, including the structures disclosed in this specification and their structural equivalents, or in combinations of one or more of them. Embodiments of the subject matter described herein may be implemented as one or more computer programs, i.e., one or more modules of computer program instructions, encoded on computer storage medium for execution by, or to control the operation of, information/data processing apparatus. Alternatively, or in addition, the program instructions may be encoded on an artificially generated propagated signal, e.g., a machine-generated electrical, optical, or electromagnetic signal, which is generated to encode information/data for transmission to suitable receiver apparatus for execution by an information/data processing apparatus. A computer storage medium may be, or be included in, a computer-readable storage device, a computer-readable storage substrate, a random or serial access memory array or device, or a combination of one or more of them. Moreover, while a computer storage medium is not a propagated signal, a computer storage medium may be a source or destination of computer program instructions encoded in an artificially generated propagated signal. The computer storage medium may also be, or be included in, one or more separate physical components or media (e.g., multiple CDs, disks, or other storage devices).

The operations described herein may be implemented as operations performed by an information/data processing apparatus on information/data stored on one or more computer-readable storage devices or received from other sources.

The term "data processing apparatus" encompasses all kinds of apparatus, devices, and machines for processing data, including by way of example a programmable processor, a computer, a system on a chip, or multiple ones, or combinations, of the foregoing. The apparatus may include special purpose logic circuitry, e.g., an FPGA (field programmable gate array) or an ASIC (application-specific integrated circuit). The apparatus may also include, in addition to hardware, code that creates an execution environment for the computer program in question, e.g., code that constitutes processor firmware, a protocol stack, a repository management system, an operating system, a cross-platform runtime environment, a virtual machine, or a combination of one or more of them. The apparatus and execution environment may realize various different computing model infrastructures, such as web services, distributed computing and grid computing infrastructures.

A computer program (also known as a program, software, software application, script, or code) may be written in any form of programming language, including compiled or interpreted languages, declarative or procedural languages, and it may be deployed in any form, including as a stand-alone program or as a module, component, subroutine, object, or other unit suitable for use in a computing environment. A computer program may, but need not, correspond to a file in a file system. A program may be stored in a portion of a file that holds other programs or information/data (e.g., one or more scripts stored in a markup language document), in a single file dedicated to the program in question, or in multiple coordinated files (e.g., files that store one or more modules, sub-programs, or portions of code). A computer program may be deployed to be executed on one computer or on multiple computers that are located at one site or distributed across multiple sites and interconnected by a communication network.

The processes and logic flows described herein may be performed by one or more programmable processors executing one or more computer programs to perform actions by operating on input information/data and generating output. Processors suitable for the execution of a computer program include, by way of example, both general and special purpose microprocessors, and any one or more processors of any kind of digital computer. Generally, a processor will receive instructions and information/data from a read-only memory or a random access memory or both. The essential elements of a computer are a processor for performing actions in accordance with instructions and one or more memory devices for storing instructions and data. Generally, a computer will also include, or be operatively coupled to receive information/data from or transfer information/data to, or both, one or more mass storage devices for storing data, e.g., magnetic, magneto-optical disks, or optical disks. However, a computer need not have such devices. Devices suitable for storing computer program instructions and information/data include all forms of non-volatile memory, media and memory devices, including by way of example semiconductor memory devices, e.g., EPROM, EEPROM, and flash memory devices; magnetic disks, e.g., internal hard disks or removable disks; magneto-optical disks; and CD-ROM and DVD-ROM disks. The processor and the memory may be supplemented by, or incorporated in, special purpose logic circuitry.

To provide for interaction with a user, embodiments of the subject matter described herein may be implemented on a computer having a display device, e.g., a CRT (cathode ray tube) or LCD (liquid crystal display) monitor, for displaying information/data to the user and a keyboard and a pointing device, e.g., a mouse or a trackball, by which the user may provide input to the computer. Other kinds of devices may be used to provide for interaction with a user as well; for example, feedback provided to the user may be any form of sensory feedback, e.g., visual feedback, auditory feedback, or tactile feedback; and input from the user may be received in any form, including acoustic, speech, or tactile input. In addition, a computer may interact with a user by sending documents to and receiving documents from a device that is used by the user; for example, by sending web pages to a web browser on a user's client device in response to requests received from the web browser.

Embodiments of the subject matter described herein may be implemented in a computing system that includes a back-end component, e.g., as an information/data server, or that includes a middleware component, e.g., an application server, or that includes a front-end component, e.g., a client computer having a graphical user interface or a web browser through which a user may interact with an implementation of the subject matter described herein, or any combination of one or more such back-end, middleware, or front-end components. The components of the system may be interconnected by any form or medium of digital information/data communication, e.g., a communication network. Examples of communication networks include a local area network ("LAN") and a wide area network ("WAN"), an inter-network (e.g., the Internet), and peer-to-peer networks (e.g., ad hoc peer-to-peer networks).

The computing system may include clients and servers. A client and server are generally remote from each other and typically interact through a communication network. The relationship of client and server arises by virtue of computer programs running on the respective computers and having a client-server relationship to each other. In some embodiments, a server transmits information/data (e.g., an HTML page) to a client device (e.g., for purposes of displaying information/data to and receiving user input from a user interacting with the client device). Information/data generated at the client device (e.g., a result of the user interaction) may be received from the client device at the server.

Similarly, while operations are depicted in the drawings in a particular order, this should not be understood as requiring that such operations be performed in the particular order shown or in sequential order, or that all illustrated operations be performed, to achieve desirable results. In certain circumstances, multitasking and parallel processing may be advantageous. Moreover, the separation of various system components in the embodiments described above should not be understood as requiring such separation in all embodiments, and it should be understood that the described program components and systems may generally be integrated together in a single software product or packaged into multiple software products.

Thus, particular embodiments of the subject matter have been described. Other embodiments are within the scope of the following claims. In some cases, the actions recited in the claims may be performed in a different order and still achieve desirable results. In addition, the processes depicted in the accompanying figures do not necessarily require the particular order shown, or sequential order, to achieve desirable results.

## Claims

1. A computer-implemented method, the computer-implemented method comprising:
receiving runway data associated with a runway to determine, based in part on the runway data, a plurality of sections of the runway;
receiving runway condition data associated with the plurality of sections of the runway, wherein the runway condition data is aggregated from a plurality of runway condition data sources (316), and
wherein the runway condition data indicates a surface condition associated with at least one section of the plurality of sections of the runway;
generating, based at least in part on inputting the runway condition data into a runway condition model (310), runway section condition output data for the at least one section;
determining, by the runway condition model (310) and based at least in part on the runway section condition output data, a runway condition code for the at least one section;
**characterized in that** the computer-implemented method further comprises:
generating, by the runway condition model (310), a confidence score associated with the runway condition code;
generating, by the runway condition model (310), an adjusted runway condition code for the at least one section based at least in part on the confidence score; and
causing rendering of a user interface based at least in part on the at least one section of the plurality of sections of the runway corresponding to the adjusted runway condition code.

2. The computer-implemented method of claim 1, the computer-implemented method further comprising:
generating, by the runway condition model (310), a validity score associated with at least one portion of the runway condition data aggregated from the plurality of runway condition data sources (316), wherein the validity score is based at least in part on timestamp data associated with the at least one portion of the runway condition data; and
generating, by the runway condition model (310), the confidence score associated with the runway condition code based at least in part on the validity score.

3. The computer-implemented method of claim 2, the computer-implemented method further comprising:
detecting a runway section transition trend associated with the at least one section of the plurality of sections of the runway, wherein the runway section transition trend indicates a transition of the surface condition of the at least one section from a first state to a second state, and
wherein the runway section transition trend is generated based at least in part on ground sensor data generated by ground sensors associated with the runway collected over a predetermined periodicity of time; and
generating, by the runway condition model (310), the confidence score associated with the runway condition code based at least in part on the runway section transition trend.

4. The computer-implemented method of claim 1, the computer-implemented method further comprising:
determining, based at least in part on a combination of the runway data, vehicle profile data associated with a vehicle, and the adjusted runway condition code associated with the plurality of sections of the runway, a plurality of required landing parameters for each section of the plurality of sections of the runway, wherein the plurality of required landing parameters are associated with executing a landing procedure for the vehicle via the runway, and
wherein the plurality of required landing parameters comprise a required landing distance associated with each section of the plurality of sections of the runway;
determining, based at least in part on the plurality of required landing parameters, that a required runway length associated with the landing procedure does not satisfy an available runway length associated with the runway; and
in response to determining that the required runway length does not satisfy the available runway length:
causing display of an alert via one or more computing devices.

5. The computer-implemented method of claim 1, the computer-implemented method further comprising:
updating, based at least in part on input received via the user interface, data related to at least one current surface condition associated with the at least one section of the plurality of sections of the runway associated with the adjusted runway condition code; and
generating, based on updating the adjusted runway condition code, one or more required landing parameters for the at least one section of the plurality of sections of the runway.

6. The computer-implemented method of claim 1, the computer-implemented method further comprising:
receiving at least one prior vehicle landing deceleration profile, wherein the at least one prior vehicle landing deceleration profile is generated by an onboard runway assessment and landing safety system associated with a vehicle upon landing on a respective runway; and
generating, by the runway condition model (310), the confidence score associated with the runway condition code based at least in part on the at least one prior vehicle landing deceleration profile.

7. The computer-implemented method of claim 3, wherein the confidence score associated with the runway condition code is generated by the runway condition model (310) based at least in part on at least one or more of validity scores associated with one or more portions of the runway condition data, runway section transition trends associated with the plurality of sections of the runway, ground operator input data generated by ground operators associated with the runway, prior vehicle landing deceleration profiles associated with one or more respective vehicles that recently landed on the runway, or vehicle operator confirmations generated by vehicle operators associated with the prior vehicle landing deceleration profiles.

8. The computer-implemented method of claim 1, wherein the plurality of runway condition data sources (316) comprises at least one ground sensor associated with the runway, digital notices to airmen (NOTAMs), voice broadcasts, automated terminal information service (ATIS) messages, datalink messages, pilot reports (PIREPs), or prior vehicle landing deceleration profiles associated with one or more respective vehicles that recently landed on the runway.

9. The computer-implemented method of claim 1, wherein the plurality of sections of the runway comprises four or more sections of the runway.

10. The computer-implemented method of claim 1, wherein the runway data comprises at least one of a runway identifier, a runway length, a runway threshold, or a runway surface type.

11. An apparatus comprising:
at least one processor; and
at least one non-transitory memory storing instructions that, when executed by the at least one processor, cause the apparatus to perform the steps of any of Claims 1-10.

## Patentansprüche

1. Computerimplementiertes Verfahren, das computerimplementierte Verfahren umfassend:
Empfangen von Rollbahndaten, die einer Rollbahn zugehörig sind, um teilweise auf Basis der Rollbahndaten eine Vielzahl von Abschnitten der Rollbahn zu bestimmen;
Empfangen von Rollbahnzustandsdaten, die der Vielzahl von Abschnitten der Rollbahn zugehörig sind, wobei die Rollbahnzustandsdaten aus einer Vielzahl von Rollbahnzustandsdatenquellen (316) aggregiert sind, und
wobei die Rollbahnzustandsdaten einen Oberflächenzustand angeben, der mindestens einem Abschnitt der Vielzahl von Abschnitten der Rollbahn zugehörig ist;
Erzeugen, mindestens teilweise auf Basis des Eingebens der Rollbahnzustandsdaten in ein Rollbahnzustandsmodell (310), von Rollbahnabschnittzustandsausgabedaten für den mindestens einen Abschnitt;
Bestimmen, durch das Rollbahnzustandsmodell (310) und mindestens teilweise auf Basis der Rollbahnabschnittzustandsausgabedaten, eines Rollbahnzustandscodes für den mindestens einen Abschnitt; **gekennzeichnet dadurch, dass** das computerimplementierte Verfahren ferner Folgendes umfasst:
Erzeugen, durch das Rollbahnzustandsmodell (310), einer Konfidenzbewertung, die dem Rollbahnzustandscode zugehörig ist;
Erzeugen, durch das Rollbahnzustandsmodell (310), eines angepassten Rollbahnzustandscodes für den mindestens einen Abschnitt mindestens teilweise auf Basis der Konfidenzbewertung; und
Veranlassen des Darstellens einer Benutzerschnittstelle mindestens teilweise auf Basis des mindestens einen Abschnitts der Vielzahl von Abschnitten der Rollbahn, der dem angepassten Rollbahnzustandscode entspricht.

2. Computerimplementiertes Verfahren nach Anspruch 1, das computerimplementierte Verfahren ferner umfassend:
Erzeugen, durch das Rollbahnzustandsmodell (310), einer Validitätsbewertung, die mindestens einem Teil der aus der Vielzahl von Rollbahnzustandsdatenquellen (316) aggregierten Rollbahnzustandsdaten zugehörig ist, wobei die Validitätsbewertung mindestens teilweise auf Zeitstempeldaten basiert, die dem mindestens einen Teil der Rollbahnzustandsdaten zugehörig sind; und
Erzeugen, durch das Rollbahnzustandsmodell (310), der Konfidenzbewertung, die dem Rollbahnzustandscode zugehörig ist, mindestens teilweise auf Basis der Validitätsbewertung.

3. Computerimplementiertes Verfahren nach Anspruch 2, das computerimplementierte Verfahren ferner umfassend:
Erkennen eines Rollbahnabschnittübergangstrends, der dem mindestens einen Abschnitt der Vielzahl von Abschnitten der Rollbahn zugehörig ist, wobei der Rollbahnabschnittübergangstrend einen Übergang des Oberflächenzustands des mindestens einen Abschnitts von einer ersten Beschaffenheit zu einer zweiten Beschaffenheit angibt, und
wobei der Rollbahnabschnittübergangstrend mindestens teilweise auf Basis von Bodensensordaten erzeugt wird, die durch der Rollbahn zugehörige Bodensensoren erzeugt werden und über eine vorbestimmte Zeitdauer gesammelt werden; und
Erzeugen, durch das Rollbahnzustandsmodell (310), der Konfidenzbewertung, die dem Rollbahnzustandscode zugehörig ist, mindestens teilweise auf Basis des Rollbahnabschnittübergangstrends.

4. Computerimplementiertes Verfahren nach Anspruch 1, das computerimplementierte Verfahren ferner umfassend:
Bestimmen, mindestens teilweise auf Basis einer Kombination aus den Rollbahndaten, Fahrzeugprofildaten, die einem Fahrzeug zugehörig sind, und dem angepassten Rollbahnzustandscode, der der Vielzahl von Abschnitten der Rollbahn zugehörig ist, einer Vielzahl von erforderlichen Landeparametern für jeden Abschnitt der Vielzahl von Abschnitten der Rollbahn, wobei die Vielzahl von erforderlichen Landeparametern dem Ausführen eines Landevorgangs für das Fahrzeug über die Rollbahn zugehörig sind, und
wobei die Vielzahl von erforderlichen Landeparametern eine erforderliche Landedistanz umfassen, die jedem Abschnitt der Vielzahl von Abschnitten der Rollbahn zugehörig ist;
Bestimmen, mindestens teilweise auf Basis der Vielzahl von erforderlichen Landeparametern, dass eine erforderliche Rollbahnlänge, die dem Landevorgang zugehörig ist, nicht mit einer verfügbaren Rollbahnlänge übereinstimmt, die der Rollbahn zugehörig ist; und
als Antwort auf das Bestimmen, dass die erforderliche Rollbahnlänge nicht mit der verfügbaren Rollbahnlänge übereinstimmt:
Veranlassen einer Anzeige eines Alarms über eine oder mehrere Rechenvorrichtungen.

5. Computerimplementiertes Verfahren nach Anspruch 1, das computerimplementierte Verfahren ferner umfassend:
Aktualisieren, mindestens teilweise auf Basis einer über die Benutzerschnittstelle empfangenen Eingabe, von Daten, die sich auf mindestens einen aktuelle Oberflächenzustand beziehen, der dem mindestens einen Abschnitt der Vielzahl von Abschnitten der Rollbahn zugehörig ist, der dem angepassten Rollbahnzustandscode zugehörig ist; und
Erzeugen, auf Basis des Aktualisierens des angepassten Rollbahnzustandscodes, eines oder mehrerer erforderlicher Landeparameter für den mindestens einen Abschnitt der Vielzahl von Abschnitten der Rollbahn.

6. Computerimplementiertes Verfahren nach Anspruch 1, das computerimplementierte Verfahren ferner umfassend:
Empfangen mindestens eines Vor-Fahrzeuglandungs-Abbremsprofils, wobei das mindestens eine Vor-Fahrzeuglandungs-Abbremsprofil durch eine bordeigene Rollbahnbeurteilung und ein Landesicherheitssystem, das einem Fahrzeug beim Landen auf einer jeweiligen Rollbahn zugehörig ist, erzeugt wird; und
Erzeugen, durch das Rollbahnzustandsmodell (310), der Konfidenzbewertung, die dem Rollbahnzustandscode zugehörig ist, mindestens teilweise auf Basis des mindestens einen Vor-Fahrzeuglandungs-Abbremsprofils.

7. Computerimplementiertes Verfahren nach Anspruch 3, wobei die dem Rollbahnzustandscode zugehörige Konfidenzbewertung durch das Rollbahnzustandsmodell (310) erzeugt wird, mindestens teilweise auf Basis mindestens einer oder mehrerer Validitätsbewertungen, die einem oder mehreren Teilen der Rollbahzustandsdaten zugehörig sind, von Rollbahnabschnittübergangstrends, die der Vielzahl von Abschnitten der Rollbahn zugehörig sind, von Bodenbedienereingabedaten, die von der Rollbahn zugehörigen Bodenbedienern erzeugt werden, von Vor-Fahrzeuglandungs-Abbremsprofilen, die einem oder mehreren jeweiligen Fahrzeugen zugehörig sind, die kürzlich auf der Rollbahn gelandet sind, oder von Fahrzeugbedienerbestätigungen, die von Fahrzeugbedienern erzeugt werden, die den Vor-Fahrzeuglandungs-Abbremsprofilen zugehörig sind.

8. Computerimplementiertes Verfahren nach Anspruch 1, wobei die Vielzahl von Rollbahnzustandsdatenquellen (316) Folgendes umfassen: mindestens einen der Rollbahn zugehörigen Bodensensor, digitale Mitteilungen für Luftfahrer (NOTAMs), Sprachübertragungen, Automatischer-Terminal-Informationsdienst-(ATIS-)Nachrichten, Datenlinknachrichten, Pilotenmeldungen (PIREPs) oder Vor-Fahrzeuglandungs-Abbremsprofile, die einem oder mehreren jeweiligen Fahrzeugen zugehörig sind, die kürzlich auf der Rollbahn gelandet sind.

9. Computerimplementiertes Verfahren nach Anspruch 1, wobei die Vielzahl von Abschnitten der Rollbahn vier oder mehr Abschnitte der Rollbahn umfassen.

10. Computerimplementiertes Verfahren nach Anspruch 1, wobei die Rollbahndaten mindestens eines von einer Rollbahnkennung, einer Rollbahnlänge, einem Rollbahnschwellenwert oder einem Rollbahnoberflächentyp umfassen.

11. Einrichtung, umfassend:
mindestens einen Prozessor; und
mindestens einen nicht-transitorischen Speicher, der Anweisungen speichert, die bei Ausführung durch den mindestens einen Prozessor die Einrichtung veranlassen, die Schritte nach einem der Ansprüche 1 bis 10 durchzuführen.

## Revendications

1. Procédé mis en œuvre par ordinateur, le procédé mis en œuvre par ordinateur comprenant :
la réception de données de piste associées à une piste afin de déterminer, sur la base au moins en partie des données de piste, une pluralité de sections de la piste ;
la réception de données d'état de piste associées à la pluralité de sections de la piste, dans laquelle les données d'état de piste sont agrégées à partir d'une pluralité de sources de données d'état de piste (316), et
dans lequel les données d'état de piste indiquent un état de surface associé à au moins une section de la pluralité de sections de la piste ;
la génération, sur la base au moins en partie de l'introduction des données d'état de piste dans un modèle d'état de piste (310), de données de sortie d'état de section de piste pour ladite au moins une section ;
la détermination, par le modèle d'état de piste (310) et sur la base au moins en partie des données de sortie d'état de section de piste, d'un code d'état de piste pour ladite au moins une section ; **caractérisé en ce que** le procédé mis en œuvre par ordinateur comprend en outre :
la génération, par le modèle d'état de piste (310), d'un score de confiance associé au code d'état de piste ;
la génération, par le modèle d'état de piste (310), d'un code d'état de piste ajusté pour ladite au moins une section sur la base au moins en partie du score de confiance ; et
le fait de provoquer l'affichage d'une interface utilisateur sur la base au moins en partie de ladite au moins une section de la pluralité de sections de la piste correspondant au code d'état de piste ajusté.

2. Procédé mis en œuvre par ordinateur selon la revendication 1, le procédé mis en œuvre par ordinateur comprenant en outre :
la génération, par le modèle d'état de piste (310), d'un score de validité associé à au moins une portion des données d'état de piste agrégées à partir de la pluralité de sources de données d'état de piste (316), dans laquelle le score de validité est basé au moins en partie sur des données d'horodatage associées à ladite au moins une portion des données d'état de piste ; et
la génération, par le modèle d'état de piste (310), du score de confiance associé au code d'état de piste sur la base au moins en partie du score de validité.

3. Procédé mis en œuvre par ordinateur selon la revendication 2, le procédé mis en œuvre par ordinateur comprenant en outre :
la détection d'une tendance de transition de section de piste associée à ladite au moins une section de la pluralité de sections de la piste, dans laquelle la tendance de transition de section de piste indique une transition de l'état de surface de ladite au moins une section d'un premier état vers un deuxième état, et
dans lequel la tendance de transition de section de piste est générée sur la base au moins en partie de données de capteurs au sol générées par des capteurs au sol associés à la piste collectées sur une périodicité temporelle prédéterminée ; et
la génération, par le modèle d'état de piste (310), du score de confiance associé au code d'état de piste sur la base au moins en partie de la tendance de transition de section de piste.

4. Procédé mis en œuvre par ordinateur selon la revendication 1, le procédé mis en œuvre par ordinateur comprenant en outre :
la détermination, sur la base au moins en partie d'une combinaison des données de piste, de données de profil de véhicule associées à un véhicule, et du code d'état de piste ajusté associé à la pluralité de sections de la piste, d'une pluralité de paramètres d'atterrissage requis pour chaque section de la pluralité de sections de la piste, dans laquelle la pluralité de paramètres d'atterrissage requis est associée à l'exécution d'une procédure d'atterrissage pour le véhicule via la piste, et
dans lequel la pluralité de paramètres d'atterrissage requis comprend une distance d'atterrissage requise associée à chaque section de la pluralité de sections de la piste ;
la détermination, sur la base au moins en partie de la pluralité de paramètres d'atterrissage requis, qu'une longueur de piste requise associée à la procédure d'atterrissage ne satisfait pas une longueur de piste disponible associée à la piste ; et
en réponse à la détermination selon laquelle la longueur de piste requise ne satisfait pas la longueur de piste disponible :
le fait de provoquer l'affichage d'une alerte via un ou plusieurs dispositifs informatiques.

5. Procédé mis en œuvre par ordinateur selon la revendication 1, le procédé mis en œuvre par ordinateur comprenant en outre :
la mise à jour, sur la base au moins en partie d'une entrée reçue via l'interface utilisateur, de données relatives à au moins un état de surface actuel associé à ladite au moins une section de la pluralité de sections de la piste associée au code d'état de piste ajusté ; et
la génération, sur la base de la mise à jour du code d'état de piste ajusté, d'un ou de plusieurs paramètres d'atterrissage requis pour ladite au moins une section de la pluralité de sections de la piste.

6. Procédé mis en œuvre par ordinateur selon la revendication 1, le procédé mis en œuvre par ordinateur comprenant en outre :
la réception d'au moins un profil de décélération d'atterrissage antérieur de véhicule, dans laquelle ledit au moins un profil de décélération d'atterrissage antérieur de véhicule est généré par un système embarqué d'évaluation de piste et de sécurité d'atterrissage associé à un véhicule lors de l'atterrissage sur une piste respective ; et
la génération, par le modèle d'état de piste (310), du score de confiance associé au code d'état de piste sur la base au moins en partie dudit au moins un profil de décélération d'atterrissage antérieur de véhicule.

7. Procédé mis en œuvre par ordinateur de la revendication 3, dans lequel le score de confiance associé au code d'état de piste est généré par le modèle d'état de piste (310) sur la base au moins en partie d'un ou plusieurs parmi des scores de validité associés à une ou plusieurs portions des données d'état de piste, des tendances de transition de section de piste associées à la pluralité de sections de la piste, des données d'entrée d'opérateur au sol générées par des opérateurs au sol associés à la piste, des profils de décélération d'atterrissage antérieurs de véhicule associés à un ou plusieurs véhicules respectifs ayant récemment atterri sur la piste, ou des confirmations d'opérateur de véhicule générées par des opérateurs de véhicule associés aux profils de décélération d'atterrissage antérieurs de véhicule.

8. Procédé mis en œuvre par ordinateur de la revendication 1, dans lequel la pluralité de sources de données d'état de piste (316) comprend au moins un capteur au sol associé à la piste, des avis numériques aux navigants aériens (NOTAM), des diffusions vocales, des messages de service automatique d'information de région terminale (ATIS), des messages par liaison de données, des comptes rendus de pilote (PIREP), ou des profils de décélération d'atterrissage antérieurs de véhicule associés à un ou plusieurs véhicules respectifs ayant récemment atterri sur la piste.

9. Procédé mis en œuvre par ordinateur de la revendication 1, dans lequel la pluralité de sections de la piste comprend quatre sections ou plus de la piste.

10. Procédé mis en œuvre par ordinateur de la revendication 1, dans lequel les données de piste comprennent au moins un parmi un identifiant de piste, une longueur de piste, un seuil de piste, ou un type de surface de piste.

11. Appareil comprenant :
au moins un processeur ; et
au moins une mémoire non transitoire stockant des instructions qui, lorsqu'elles sont exécutées par ledit au moins un processeur, amènent l'appareil à exécuter les étapes de l'une quelconque des revendications 1-10.
